# EUROPEAN PATENT APPLICATION

(11) **EP 1 785 627 A1**
(43) Date of publication of application: **16.05.2007**
(21) Application number: 05760153.6
(22) Date of filing: 08.07.2005
(51) Int. Cl.: F04B 39/00

(54) **SLIDING MEMBER OF COMPRESSOR**

(30) Priority: 09.07.2004 JP 2004203871; 10.02.2005 JP 2005034522
(71) Applicant: KABUSHIKI KAISHA TOYOTA JIDOSHOKKI, Kariya-shi, Aichi 448-8671 (JP)
(72) Inventor: SHIBUYA, Nobuhiro, MITSUBISHI PLASTICS, INC., Nagahama-shi, Shiga526 0023 (JP); SHIMO, T., KABUSHIKI KAISHA TOYOTA JIDOSHOKKI, Kariya-shi, Aichi 4488671 (JP); HAYASHI, H., KABUSHIKI KAISHA TOYOTA JIDOSHOKKI, Kariya-shi, Aichi 4488671 (JP); YOSHIDA, Hirohiko, MITSUBISHI PLASTICS, INC., Tokyo 1000005 (JP)
(74) Representative: TBK-Patent
(86) International application number: PCT/JP2005/013107
(87) International publication number: WO 2006/006697

(57) **Abstract**

A slide member of the present invention is **characterized in that** it has: a substrate, which is made of a metal; an intermediate layer, which is formed on at least one of the surfaces of the substrate, and which is composed a first resinous composition including a thermoplastic polyimide resin and a polyaryl ketone resin; and a superficial layer, which is formed on the intermediate layer, and which is composed of a second resinous composition including a polyaryl ketone resin.

Since the slide member of the present invention is such that it is possible to form it at low temperature, the deterioration of the substrate is suppressed; moreover, it is a slide member having a superficial layer, which includes a polyaryl ketone resin which is good in terms of the adhesiveness to a substrate.

## Description

### TECHNICAL FIELD

The present invention relates to a slide member for a compressor, slide member which is good in terms of the heat resistance, wear resistance, chemical resistance, and the like.

### BACKGROUND ART

Among thermoplastic resins, polyarylketone resins, such as polyether ether ketone resins or polyether ketone resins, possesses high mechanical strength, and are good in terms of the heat resistance, flame resistance, wear resistance, chemical resistance, hydrolysis resistance, and the like. Accordingly, while focusing on aircraft component parts, automobile component parts and electric/electronic component parts, they have been adopted in a broad range of fields.

One of the examples is a swash plate for a compressor, which is set forth in Japanese Unexamined Patent Publication (KOKAI) Gazette No. 2002-39,062, and a sliding layer, which includes a polyether ether ketone resin, is formed on the surface of a substrate. However, polyether ether ketone resins, due to their good chemical resistance, hardly dissolve into solvents. Accordingly, it is difficult to form a resinous layer by applying a paint composition, in which a polyether ether ketone resin is solved, onto a substrate.

Hence, in Japanese Unexamined Patent Publication (KOKAI) Gazette No. 2000-96,203, a method, in which a polyether ether ketone resin is thermal sprayed onto a substrate by means of a high-velocity oxygen fuel (HVOF) process, is disclosed. In this method, a polyether ether ketone resin, which has been heated to 340 °C, is propelled by means of an HVOF process toward a substrate at a high velocity, and the polyether ether ketone resin is deposited onto the substrate's surface. In this instance, in the substrate's surface, residual stresses might occur, and consequently a treatment for relieving the residual stresses becomes necessary after the thermal spraying.

Moreover, there is a method, as well, in which a sheet-shaped polyether ether ketone resin and a substrate are laminated and are then adhered together. However, polyether ether ketone resins, due to their heat resistance, are such that the melting point is high (the melting point of polyether ether ketone resin is 334 °C) so that they are unlikely to melt. Accordingly, in order to form a resinous layer by adhering a sheet, and the like, of a polyether ether ketone resin onto a substrate, it is needed to give the sheet a high temperature, which is the melting point of the polyether ether ketone resin or more; however, depending on the temperature, there is a fear that the substrate degrades (specifically, the hardness lowering by means of annealing hardened iron or aluminum). Moreover, since it takes time to heat raw materials or to cool after forming a resinous layer, the production efficiency becomes low.

Further, even when using an electrostatic powder method, which is set forth in "KOGYO ZAIRYOU": 66-69, Vol. 48, No. 5 (2000), since the superficial temperature of a substrate rises up to 400 °C approximately, the aforementioned problematic points cannot be avoided.

Moreover, since polyaryl ketone resins are less likely to adhere with metals independently, it has been difficult to laminate them onto substrates made of metals. Hence, in equipment and materials for electronic circuit boards, which require the lamination onto copper foils or aluminum foil, in order to take advantage of their heat resistance as crystalline resin whose melting point is high, mixtures of polyaryl ketone resins and polyether imide resins, whose adhesiveness to metals is satisfactory and which have heat resistance, have come to be noticed.

In Japanese Unexamined Patent Publication (KOKAI) Gazette No. 59-115,353, there are disclosed facts that the aforementioned mixtures show satisfactory bondability to copper foils and are useful for substrates for circuit boards. Further, in Japanese Unexamined Patent Publication (KOKAI) Gazette No. 2002-212,314, Japanese Patent Gazette No. 3, 514, 667 and Japanese Unexamined Patent (KOKAI) Gazette No. 2002-144,436, a printed wiring assembly, which uses the aforementioned mixtures, or a laminated body with a metallic body, and their production processes, and a thermally-fusible insulation sheet are disclosed.

However, since the aforementioned mixtures have limitations in terms of the chemical resistance, such as alkaline resistance, the wear resistance and the slidability, they are not necessarily sufficient in the fields of mechanical component parts, automobile component parts, and the like, and there have been limitations in terms of the intended use.

### DISCLOSURE OF THE INVENTION

The present invention has been done in view of the aforementioned circumstances, and it is an object to provide a slide member possessing a superficial layer, which includes a polyaryl ketone resin which is good in terms of the adhesiveness to substrates made of metal, even when being formed at low temperature.

The present inventors, as a result of various earnestly-devoted studies, found out that it is possible to solve the aforementioned problems by disposing an intermediate layer, which is composed of a thermoplastic polyimide resin and a polyaryl ketone resin, between a substrate made of a metal and a superficial layer including a polyaryl ketone resin, and then arrived at completing the present invention based on this knowledge.

That is, a slide member of the present invention is characterized in that it has: a substrate, which is made of a metal; an intermediate layer, which is formed on at least one of the surfaces of the substrate, and which is composed a first resinous composition including a thermoplastic polyimide resin and a polyaryl ketone resin; and a superficial layer, which is formed on the intermediate layer, and which is composed of a second resinous composition including a polyaryl ketone resin.

Said superficial layer can preferably further include a solid lubricant in an amount of 400 parts by mass or less when said second resinous composition is taken as 100 parts by mass. In this instance, said superficial layer. Moreover, said solid lubricant can preferably include at least one member of polytetrafluoroethylene, graphite and molybdenum disulfide.

Moreover, said polyimide resin can preferably be a polyetherimide resin, which has a repeating unit being expressed by structural formula (1) and/or structural formula (2); and said polyaryl ketone resin can preferably be a polyether ether ketone resin, which is expressed by structural formula (3).

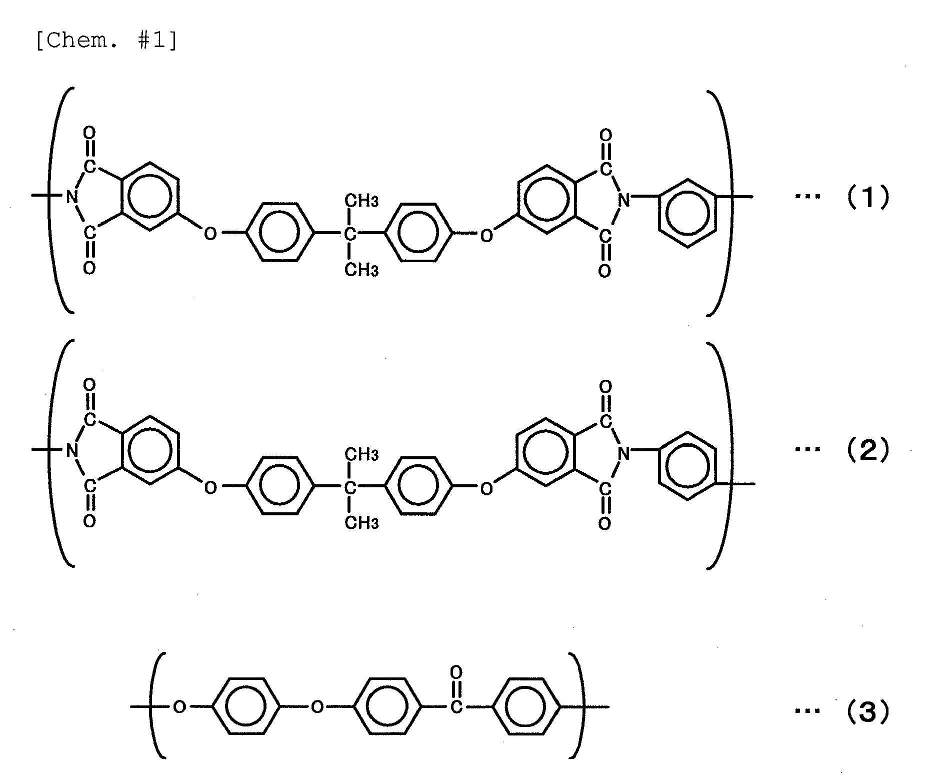

In the slide member of the present invention, by using the intermediate layer, which is composed of a resinous composition including a thermoplastic polyimide resin and a polyaryl ketone resin, a slide member is obtainable, slide member which possesses a superficial layer, which includes a polyaryl ketone resin which is good in terms of the adhesiveness to substrates made of metal, even when being formed at low temperature. As a result, even when using such types of metals, which cannot be employed because of the problem of the deterioration, and the like, of substrates made of metals, deterioration which results from high temperatures, it is possible to form the superficial layer, which includes a polyaryl ketone, on the substrate.

And, by means of possessing the intermediate layer, it has better sliding characteristics than the conventional slide member, in which a superficial layer including a polyaryl ketone resin is disposed independently on a substrate made of metal, does. Moreover, by means of the fact that the superficial layer includes a solid lubricant, it becomes a slide member, which possesses much better sliding characteristics.

### BEST MODE FOR CARRYING OUT THE INVENTION

Hereinafter, the best mode for carrying out a slide member of the present invention will be explained.

A slide member of the present invention has a substrate, which is made of a metal, an intermediate layer, which is formed on at least one of the surfaces of the substrate, and a superficial layer, which is formed on the intermediate layer.

The substrate employed for the present invention is such that, as far as it is made of a metal, there is not any limitation particularly. As for the substrate, which is made of a metal, iron, chromium, nickel, zinc, aluminum, aluminum alloys, magnesium, magnesium alloys, titanium, titanium alloys, copper, silver, gold, pyrites, brass, bronze, cast iron, carbon steels, stainless steels, super alloys (NCF800 and NCF600, for instance), and the like, can be named. Moreover, it is possible to employ those in which plating, such as zinc, tin, chromium, nickel, zinc and aluminum, is performed onto iron or carbon steels as well. Among these, from the viewpoint of being of high rigidity and being less expensive, it can preferably be iron, cast iron, stainless steels, carbon steels, carbon steels onto which zinc plating is performed, and carbon steels onto which zinc-aluminum plating is performed. Further, from the viewpoint that rust is less likely to occur, it can more preferably be stainless steels. As for the stainless steel, those with various alloy compositions are available; for example, SUS301, SUS301L, SUS302, SUS302B, SUS303, SUS303Se, SUS304, SUS304L, SUS304J1, SUS304J2, SUS305, SUS309S, SUS310S, SUS316, SUS316L, SUS317, SUS321, SUS329J1, SUS329J3L, SUS329J4L, SUS347, SUS403, SUS405, SUS410, SUS430, SUS434, SUS436L, SUS436J1L, SUS444, SUS447J1, SUS304cu1, SUSXM7, SUSXM27, SUSXM15J1, SUS630, SUS631, SUH409, SUH21 and SUH409L, and so forth, can be named. Further, it is possible to employ those in which rolling or heat treatments are given to these stainless steels, and so on, too.

Moreover, although the configuration of the substrate is not limited particularly, planar bodies, disk bodies, curved bodies, semi-spherical bodies, corrugated bodies, cylindrical bodies, tubular bodies, and the like, can be named, for instance. Among these, those which are readily processed are the planar bodies; and, as for the planar bodies, cut sheet-shaped bodies, continuous strip-shaped bodies (coils), and so forth, can be named.

Sliding component parts for compressors are especially preferable as the substrate. That is, the slide member having the sliding layer of the present invention can be adapted to slide members for compressors. For example, the slide member can be used for swash plates for swash-plate type compressors. Moreover, the slide member can be used for shoes for compressors. A "swash plate and shoe for swash plate-type compressors" are such that there arises the case that they slide with each other in a dry state without any lubricant in their initial period of operation. Even in the case where they slide in such a very severe dry state, it is desired that they do not cause seizure or wear, and the like. Hence, by using the slide member of the present invention, which is good in terms of the sliding characteristics, for a swash plate or shoes for swash plate-type compressors, it is possible to satisfy the conditions, which are required for swash plate-type compressors, sufficiently.

In addition to those aforementioned, it can be used as well for a sliding bearing, which supports the driving shaft of a compressor. Moreover, it can be used for a rotary valve, which is supported axially to the driving shaft of a piston-type compressor integrally, and additionally which is supported pivotally to the housing of a piston compressor rotatably so as to rotate synchronously with the driving shaft to make the gas passage between the compression chamber and the inlet pressure region openable and closable; or for a piston for a piston-type compressor.

When the substrate is a slide member for a compressor, iron or steels, aluminum or aluminum alloys, which include Mg, Cu, Zn, Si, Mn, and the like, copper or copper alloys, which include Zn, Al, Sn, Mn, and so forth, are preferable, for instance.

Moreover, although there is not any limitation on the thickness of the substrate, when being 0.01-50 mm approximately, more preferably 0.05-20 mm, much more preferably 0.1-15 mm, it is suitable as a slide member.

The substrate is such that it is advisable to perform a surface treatment onto the surface on which the intermediate layer is formed. The surface treatment can be carried out by means of various methods; as for a treated surface, surfaces, onto which treatments, such as rolling, heat treatments and acid washing, are performed (for example, JIS G0203-2000, JIS G4305-1999, and No.1, No. 2D and No.2B, which are prescribed in the AISI standard), and the like; further, polished surfaces (for example, No. 3, No. 4, #240, #320 and #400, which are prescribed in the aforementioned standards, and the like) ; surfaces onto which cold rolling and bright treatment are performed (for example, BA, which are prescribed in the aforementioned standards, and the like); surfaces which are subjected to polishing (for example, HL that means hair line, No. 7, the vibration that means non-directional hair-line polishing finish, No. 8, the mirror finish, which are prescribed in the aforementioned standards, and the like), and so forth, can be named, for instance. Moreover, as for the other surface-treatment methods, shot blasting or bead blasting by means of blasting method; matted-surface finish by means of blasting method; bright finish; chemical color development; embossing; etching; and plating finish by means of metals that differ from ground (for example, plating by means of gold, silver, copper, aluminum, chromium, and the like), and so on, can be named.

Among these, those whose ten-point average roughness (Rz) of surface roughness parameters, being prescribed in JIS B0601-1994, falls in a range of 0.01-80 µm are preferable, further preferably, those with 0.4-20 µm. When Rz is 0.01 µm or more, the bond to the intermediate layer becomes satisfactory; and, when Rz is 80 µm or less, the influence onto the irregularity of the superficial layer is small.

Moreover, the maximum height (Ry) of surface roughness parameters, being prescribed in JIS B0601-1994, usually falls in a range of 0.01-100 µm, preferably, 0.5-25 µm. When Ry is 0.01 µm or more, the bond strength between the substrate surface and the intermediate layer becomes satisfactory; and, when being 100 µm or less, the influence on the irregularity of the superficial layer is small.

Similarly, the arithmetic average roughness (Ra) of surface roughness parameters, being prescribed in JIS B0601-1994, usually falls in a range of 0.001-10 µm, preferably, 0.05-2.5 µm.

These surface roughnesses (Rz, Ry and Ra), being prescribed in JIS B0601-1994, can be measured, employing commercially available surface-roughness measuring apparatuses (as one of the examples, a surface-roughness measuring apparatus, type "SE3-FK" produced by KOSAKA KENKYUSHO Co., Ltd., and the like).

The intermediate layer is composed of a first resinous composition, which includes a thermoplastic polyimide resin and a polyaryl ketone resin. The thermoplastic polyimide resin employed in the intermediate layer is thermoplastic resins whose structural unit includes aromatic nucleus bonds and imide bonds; although polyether imide resins and aromatic polyamide imide resins, and the like, can be named as specific examples, it is not limited in particular. Specifically, polyether imide ("Ultem1000" (glass transition temperature Tg = 216 °C), and "Ultem1010" (glass transition temperature Tg = 216 °C) produced by GENERAL ELECTRIC Corp.), which has a repeating unit being expressed by following structural formula (1), 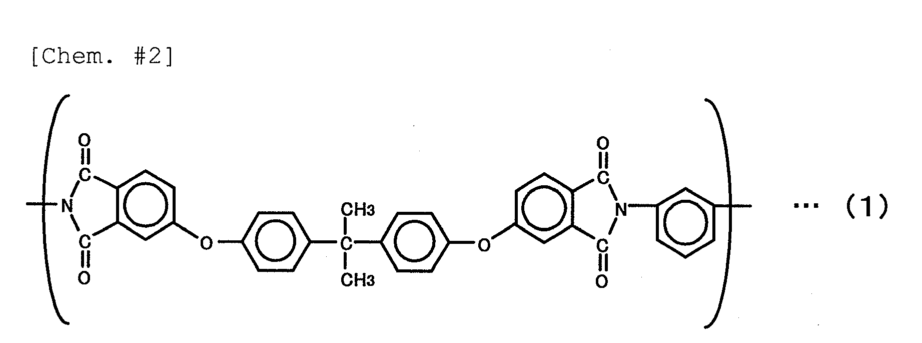 and polyether imide ("UltemCRS5001" (Tg = 226°C) produced by GENERAL ELECTRIC Corp.), which has a repeating unit being expressed by following structural formula (2), 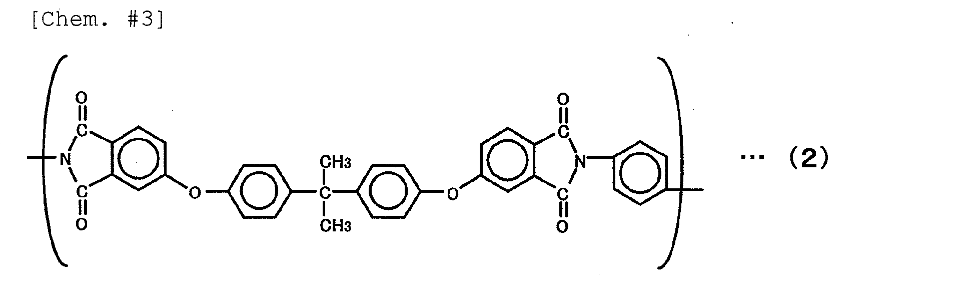 can be named; as the other specific examples, "UltemXH6050" (Tg = 247 °C) produced by GENERAL ELECTRIC Corp., "AurumPL500AM" (Tg = 258 °C) produced by MITSUI KAGAKU Co., Ltd., and the like, can be named. Among these, those being amorphous are preferable; further preferably, it can be polyether imide, which has a repeating unit being expressed by aforementioned structural formula (1) or (2).

Although the production method for polyether imide resin is not limited in particular, usually, it is produced by means of known methods while an amorphous polyether imide resin, which has a repeating unit being expressed by aforementioned structural formula (1), is adapted to a polycondensate of 4,4'-[isopropylidenebis(p-phenyleneoxy)] diphthalic dianhydride with m-phenylenediamine; or an amorphous polyether imide resin, which has a repeating unit being expressed by aforementioned structural formula (2), is adapted to a polycondensate of 4,4'-[isopropylidenebis(p-phenyleneoxy)] diphthalic dianhydride with p-phenylenediamine.

Moreover, it does not matter that the polyether imide resin used in the present invention, depending on needs, can be those which include other monomer units having coplymerizable groups, such as amide groups, ester groups and sulfonyl groups. Note that the thermoplastic polyimide resin is such that it is possible to use one member thereof independently, or to combine two or more members thereof to use.

The polyaryl ketone resin employed in the intermediate layer is thermoplastic resins whose structural unit includes aromatic nucleus bonds and ketone bonds; as for the representative examples, polyether ketone (glass transition temperature: 157 °C, and crystalline fusion peak temperature: 373°C), polyether ether ketone (glass transition temperature: 143 °C, and crystalline fusion peak temperature: 334 °C), polyether ether ketone ketone (glass transition temperature: 153 °C, and crystalline fusion peak temperature: 370 °C), and the like, are available; moreover, depending on needs, it does not matter that it can be those which include other repeating units having coplymerizable structures or groups, such as biphenyl structures and sulfonyl groups. In the present invention, polyetheretherketone, which has a repeating unit being expressed by following structural formula (3) can be employed suitably. 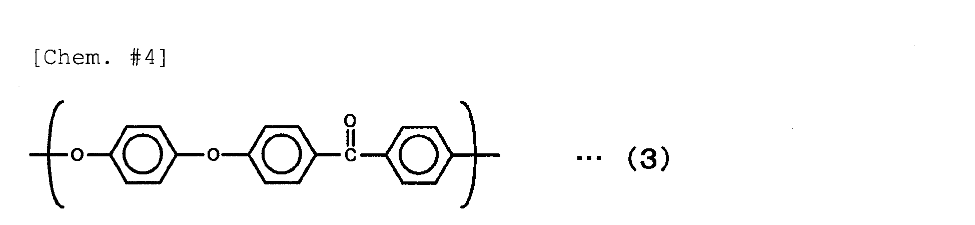 The polyetheretherketone, which has this repeating unit, is commercially available as "PEEK151G," "PEEK381G," "PEEK450G," product names, produced by VICTREX Corp., and the like. All of these are those whose glass transition temperature is 143 °C and crystalline fusion peak temperature is 334 °C. Note that the polyaryl ketone resin is such that it is possible to use one member thereof independently, or to combine two or more members thereof to use.

The resinous composition, which is composed of the aforementioned thermoplastic polyimide resin and polyaryl ketone resin is such that the compatibility is good to each other; moreover, under the low-temperature condition of 400 °C or less, the elasticity lowers moderately to exhibit flowability appropriate for bonding. Accordingly, the intermediate layer, which includes the resinous composition, being composed of the thermoplastic polyimide resin and polyaryl ketone resin, bonds with the substrate, which is made of a metal, satisfactorily. Further, since the crystallinity of polyaryl ketone enhances by means of heating at 200 °C or more, the inherent properties of polyaryl ketone resin is demonstrated satisfactorily. Moreover, when using the substrate whose surface is turned into a rough surface by means of the surface treatments (being described above), the bond strength enlarges much more.

The resinous composition, which exhibits the properties as aforementioned, is such that a mass ratio of the thermoplastic polyimide resin to the polyaryl ketone resin can preferably be 95:5-5:95. That is, upon taking the sum of the thermoplastic polyimide resin and the polyaryl ketone resin as 100% by mass, when the thermoplastic polyimide resin is 95% by mass or less, it is possible to have it show the good heat resistance or low water-absorbing property, which the polyaryl ketone resin possesses. Moreover, when being 5% by mass or more, the bondability between the intermediate layer and the substrate, which is made of a metal, becomes satisfactory. A more preferable ratio is such that the mass ratio of the thermoplastic polyimide resin to the polyaryl ketone resin can be 95:5-45:55, further preferably 85:15-50:50.

In particular, when employing a crystalline polyaryl ketone resin as the polyaryl ketone resin, a mass ratio of the thermoplastic polyimide resin to a crystalline polyaryl ketone resin can preferably be 80:20-55:45. That is, upon taking the sum of the thermoplastic polyimide resin and a crystalline polyaryl ketone resin as 100% by mass, when the thermoplastic polyimide resin is 80% by mass or less, the crystallinity of the intermediate layer becomes high, the crystallization rate is fast, too, and the heat resistance is satisfactory. Moreover, when being 55% by mass or more, the volumetric contraction (dimensional change), which is accompanied by the crystallization of a crystalline polyaryl ketone resin, is less likely to enlarge, and accordingly reliability can be obtained in the bondability to the substrate, which is made of a metal.

The superficial layer is formed on the intermediate layer, and is composed of a second resinous composition, which includes a polyaryl ketone resin. The polyaryl ketone resin employed for the superficial layer is such that it is possible to employ the same polyaryl ketone resins (described above) as employed for the intermediate layer. In this instance, although the same type of polyaryl ketone resin as that of the intermediate layer can be employed; or a different type of polyaryl ketone resin can be employed, it is preferable to employ polyaryl ketone, which has a repeating unit being expressed by aforementioned structural formula (3).

Moreover, the superficial layer can include resinous components other than the polyaryl ketone resin; when resinous components (second resinous composition), which constitute the superficial layer, are taken as 100% by mass, it is preferable to include the polyaryl ketone resin in an amount of 50% by mass or more, further preferably 60% by mass or more. The superficial layer, which includes the polyaryl ketone resin in an amount of 50% by mass or more, is good in terms of the heat resistance, flame resistance, wear resistance, chemical resistance, and the like.

Note that the aforementioned first resinous composition can include resinous components other than the thermoplastic polyimide resin and polyaryl ketone resin. Similarly, the second resinous composition can include resinous components other than the polyaryl ketone resin.

The superficial layer can be a layer, which further includes a solid lubricant. The layer, which includes a solid lubricant, is good in terms of the sliding characteristics. As for the solid lubricant, it can be fluorine compounds, such as fluorocarbon resins or fluorinated graphite and calcium fluoride, lamellar structural substances, such as graphite or talc, soft metals, such as Pb, Ag and Cu, and their compounds, and the like, which have been used usually as a solid lubricant. In addition to them, titanium oxide, tungsten carbide, boron nitride, melamine cyanurate, and so forth, can be employed.

As for a fluorocarbon resin, it is not limited particularly as far as synthetic polymers, which contain a fluorine atom in the molecule; and it is possible to use known ones. As such, for example, (a) polytetrafluoroethylene (PTFE), which has a repeating unit expressed by - (CF₂CF₂)- in the molecule; (b) tetrafluoroethylene-hexafluorpropylene copolymer (FEP), which has a repeating unit expressed by -(CF₂CF₂)- and -[CF(CF₃)CF₂]- in the molecule, preferably, which is composed of 99-80%-by-mass - (CF₂CF₂)-and 1-20%-by-mass -[CF(CF₃)CF₂]-; (c) tetrafluoroethylene-perfluoroalkylvinylether copolymer (PFA), which has a repeating unit expressed by -(CF₂CF₂)- and -[CF(OCₘF₂ₘ₊₁)CF₂]- in the molecule (in the formula, "m" is a positive integer which falls in the range of 1-16, preferably, falls in the range of 1-10), preferably, which is composed of 99-92%-by-mass -(CF₂CF₂)- and 1-8%-by-mass - [CF(OCₘF₂ₘ₊₁)CF₂]-; (d) tetrafluoroethylene-ethylene copolymer (ETFE), which has a repeating unit expressed by -(CF₂CF₂)- and - (CH₂CH₂)- in the molecule, preferably, which is composed of 90-74%-by-mass -(CF₂CF₂)- and 10-26%-by-mass -(CH₂CH₂)-; (e) chlorofluoroethylene-ethylene copolymer, which has a repeating unit expressed by -(CFClCF₂)- and -(CH₂CH₂)- in the molecule; (f) polyvinyliden fluoride (PVDF), which has a repeating unit expressed by - (CF₂CH₂)- in the molecule, and the like, can be named. Further, these fluorocarbon resins are such that those, which include repeating structural units, being based on other monomers, in such ranges that they do not impair the essential properties, can be named as well. As for the aforementioned other monomers, tetrafluoroethylene (however, PFA, FEP and ETFE are excluded.), hexafluoropropylene (however, FEP is excluded.), perfluoroalkylvinylether (however, PFA is excluded.), perfluoroalkylethylene (the alkyl group's carbon number: 1-16), perfluoroalkylarylether (the alkyl group's carbon number: 1-16), and compounds, which are specified by a formula: CF₂=CF[OCF₂CF(CF₃)]ₙOCF₂(CF₂)ₚY (in the formula, "Y" expresses Cl, Br or I; "n" expresses an integer of 0-5; and "p" expresses an integer of 0-2), can be named. The amount of repeating structural units, which are based on the other monomers, can be 50% by mass or less, preferably 0.01-45% by mass, of the polymers.

Among these fluorocarbon resins, those, which are selected from (a) polytetrafluoroethylene (PTFE), (b) tetrafluoroethylene-hexafluorpropylene copolymer (FEP), (c) tetrafluoroethylene-perfluoroalkylvinylether copolymer (PFA) and (d) tetrafluoroethylene-ethylene copolymer (ETFE), are preferable; and, (a) PTFE is further preferable.

Although the molecular weight of the aforementioned fluorocarbon resins is not limited in particular, in the case of meltable PTFE especially, those whose molten viscosity is million Pa·s or less at 380 °C are preferable. These fluorocarbon resins can be used independently, or can be combined to use.

The aforementioned fluorocarbon resins can be either powders for forming or fine powders for solid-lubricant materials. As for commercially available products of polytetrafluoroethylene, "TEFLON 7J" or "TLP-10," produced by MITSUI-DUPONT FLUOROCHEMICAL Co., Ltd., "FLUON G163," produced by ASAHI GARASU Co., Ltd., "POLYFULON M15" or "LUBLON L5," produced by DAIKIN KOGYO Co., LTD., and the like, can be named.

As for the graphite employed in the present invention, natural scaly graphite, natural earthy graphite, artificial graphite, pyrolytic graphite, and the like, can be named; preferably, it can be natural scaly graphite or artificial graphite. The scaly graphite is naturally-occurring graphite, which includes those, whose appearance is shown as plate shapes, scale shapes, leaf shapes and needle shapes, mostly. The artificial graphite can be those, which can be obtained by pulverizing aggregated substances, being obtained by calcining carbonaceous sources, such as the mixtures of cokes and pitches, at high temperature; or those types, which are produced by vapor-phase growth and whose crystallinity is high. The pyrolytic graphite is one which can obtained by calcining a carbonaceous source, such as cokes, at such a high temperature as 3,000 °C to graphitize it. These natural scaly graphite, artifical graphite and pyrolytic graphite are such that, compared with the natural earthy graphite, ash components or impurities, such as silicon dioxide and silicate compounds, and volatile components are less, and are good in terms of the heat resistance and lubricating property; moreover, even when blending them into resins, the resinous deterioration is less likely to take place. Moreover, the average particle diameter of graphite employed in the present invention is such that the average particle diameter, which is measured by means of laser diffraction method, is 1-100 µm; those with 4-80 µm is preferable; and those with 5-60 µm is further preferable.

When the average particle diameter is 100 µm or less, it is likely to obtain uniform dispersion in the resinous component and satisfactory formed-film appearance; and, when being 1 µm or more, the handling trouble, such as the scattering of powders, is less likely to take place when blending or kneading it into the resinous component; and, in the case of molten kneading it using an extruder, and so forth, the problems, such as the unstable metering, which results from the defective meshing with the screw, or the degraded pull-out ability, which results from the unstable configuration of extruded substance, are less likely to take place.

The less the ash content in the graphite employed in the present invention is the more preferable it is; and it can usually be 2% by mass or less, further preferably 0.05-1% by mass. When falling in the range of 2% by mass or less, upon blending it into the resinous component to employ it, the thermal deterioration of the resinous component during processing is less likely to take place.

Moreover, the less the volatile components in the graphite are the more preferable it is; and it can usually be 2% by mass or less, preferably 1% by mass or less. When falling in the range of 2% by mass or less, the foaming becomes less during molten kneading with the resinous component.

As for examples of commercially available products of these graphites, "CPB-3" (natural scaly graphite), "CPB-30" and "CPB-3000, " produced by KABUSHIKI KAISHA CHU-ETSU KOKUEN KOGYOSHO Co., Ltd., "CP," "Extra CP," and "CPB," produced by NIHON KOKUEN KOGYO Co., Ltd., "TimrexKS-44" (artificial graphite), produced by Timcal Corp., and the like, can be named.

Moreover, it is advisable to use transition metal sulfides as well. As for the transition metal sulfides, molybdenum disulfide, tungsten disulfide, and the like, can be named; in order to disperse them into the intermediate layer's resins and/or into the superficial layer's resin, they can preferably be a powder. This one' s average particle diameter can be 0.1-20 µm, preferably 0.3-11 µm. When the average particle diameter is 0.1 µm or more, the handling trouble, which results from the scattering of powders, is less likely to take place during molten kneading with the resinous component; and, when being 20 µm or less, the defective dispersion into the resinous component or the defective film appearance is less likely to take place.

As the specific example of a molybdenum disulfide powder, "MORI POWDER A" (average particle diameter: 0.5 µm), "MORI POWDER B" (average particle diameter: 3 µm) and "MORI POWDER C" (average particle diameter: 0.3-0.4 µm), produced by NIHON KOKUEN KOGYO Co., Ltd., "MOS," produced by SUMIKO JUNKATSU-ZAI Co., LTd., and the like, can be named. As the specific examples of tungsten disulfide, "TANMIC A" (average particle diameter: 1 µm) and "TANMIC B" (average particle diameter: 0.6 µm), produced by NIHON JUNKATSU-ZAI Co., LTd., and so forth, can be named.

Moreover, it is advisable to use hexagonal boron nitride (h-BN) as well. In order to disperse hexagonal boron nitride into the intermediate layer's resins and/or into the superficial layer's resin, it can preferably be a powder. This one's average particle diameter can be 0.01-100 µm, preferably 0.1-20 µm, more preferably 3-15 µm. When the average particle diameter is 0.1 µm or more, the handling trouble, which results from the scattering of powders, is less likely to take place during molten kneading with the resinous component; and, when being 100 µm or less, the defective dispersion into the resinous component or the defective film appearance is less likely to take place. The specific surface area can be 0.1-100 m²/g, preferably 1-20 m²/g. When the specific surface area is 0.1 m²/g or more and 100 m²/g or less, the defective dispersion is less likely to take place.

As the specific example of hexagonal boron nitride, those, which are marketed by MIZUSHIMA GOKIN TETSU Co., Ltd., GE SPECIALITY MATERIALS JAPAN Co., Ltd., and the like, are available, and are employable.

Among those aforementioned, it can be at least one member of polytetrafluoroethylene, graphite and molybdenum disulfide.

Moreover, the superficial layer can preferably include said solid lubricant in an amount of 400 parts by mass or less when the second resinous composition is taken as 100 parts by mass. The included solid lubricant can preferably be 100 parts by mass or less, more preferably 5-55 parts by mass, further preferably 10-45 parts by mass. When the amount of the solid lubricant falls in these ranges, the lubricational characteristic improves without impairing the adhesiveness to the substrate, which is made of a metal.

Note that the solid lubricant can be included in the intermediate layer, too. In this instance, the solid lubricant can be included to such an extent that it does not impair the characteristics of the intermediate layer; when the resinous composition (the sum of a thermoplastic polyimide resin and a polyaryl ketone resin) is taken as 100 parts by mass, it is advisable to include the solid lubricant in an amount of 400 parts by mass or less. The included solid lubricant can preferably be 100 parts by mass or less, more preferably 5-55 parts by mass, further preferably 10-45 parts by mass. When the amount of the solid lubricant falls in these ranges, the lubricational characteristic improves without impairing the adhesiveness to the substrate, which is made of a metal. Moreover, when the solid lubricant is 100 parts by mass or less, the remarkable degradation of processability, which might possible take places in the instance that unemployed portion of the intermediate layer, which occurs in the production process, is recycled to use, can be suppressed.

Moreover, at least either one of the intermediate layer and the superficial layer can be a layer, which includes an inorganic filler material. As for the inorganic filler material, those being known publicly can be employed; for example, filler materials, such as clay, glass, alumina, silica, aluminum nitride, silicon nitride and graphite, fibers, such as glass fibers, aramid fibers and carbon fibers, inorganic scale-shaped (plate-shaped) powders, for example, synthetic mica, natural mica (muscovite, frogovite, cellisite, suzolite, and the like), calcined synthetic mica or natural mica, boehmite, talc, illite, kaolinite, montmorillonite, vermiculite and smectite, plate-shaped alumina, scale-shaped titanate (for example, scale-shaped potassium magnesium titanate, scale-shaped potassium lithium titanate, and so forth), and so on, can be named. Among them, inorganic scale-shaped (plate-shaped) powders, such as synthetic mica, natural mica, calcined synthetic mica or natural mica, boehmite, talc, illite, kaolinite, montmorillonite, vermiculite and smectite, plate-shaped alumina, and scale-shaped titanates are preferable; and synthetic mica and natural mica are more preferable. These inorganic filler materials are such that it is possible to use one species thereof independently, or to combine two or more species thereof to use.

As for the configuration of this inorganic filler material, plate shapes are preferable, and those, whose average particle diameter is 0.01-200 µm approximately, preferably 0.1-20 µm, more preferably 1-10 µm, and whose average aspect ratio (particle diameter/thickness) is 1-30 approximately, preferably 30 or more, can be used suitably.

Moreover, the inorganic filler material is such that it is advisable to use one which is surface treated by means of a surface-treating agent. As for the surface-treating agent, amino silane, epoxy silane, vinyl silane, silane coupling agents, such as silane compounds which have an acryloxy group or methacrloxy group, alkoxy silane in which one or two straight-chain, branched or cyclic hydrocarbon groups whose carbon number falls in the range of 1-30 are bonded to a silicon atom, titanate-system coupling agents, aluminate-system coupling agents, zirconate coupling agents, and the like, can be named. The employment amount of the surface-treating agent usually falls in the range of 0.1-8 parts by mass, preferably 0.5-3 parts by mass, with respect to 100 parts by mass of the inorganic filler.

As for the method of surface treating, various known methods can be applied. For example, a wet method in which a solvent is removed after contacting an inorganic filler material with a surface-treating agent in a solution in which the surface-treating agent is solved, a semi-wet method in which a solvent is removed after sprinkling a surface-treating agent onto the surface of an inorganic filler material after contacting a solution, in which the surface-treating agent is solved with the inorganic filler material, by means of a method, such as spraying and stirring, an integral blending method in which a resin, an inorganic filler material and a surface-treating agent, or a surface-treating agent, which is solved in a small-amount solvent, are mixed and stirred, and the like, can be named. From the viewpoint of adhering a surface-treating agent onto the surface of an inorganic filler material efficiently, the wet method, and the semi-wet method are preferable.

The concentration of a surface-treating agent in a solvent can be adapted to the concentration of 0.1-80% by mass approximately. As for the solvent, those, such as isopropyl alcohol, ethanol, methanol and hexane, which are likely to be removed, are preferable, for instance. This solvent can be those which include small-amount water, or small-amount acid components, which facilitate hydrolysis.

After contacting and mixing an inorganic filler material with a surface-treating agent, which is diluted in water or which is not diluted, by means of the aforementioned method of surface treatment, it is recommended to leave them in air for from a couple of hours to a couple of days so as to contact them with moisture in air to let hydrolysis take place, and additionally to evaporate and remove the employed solvent.

This evaporation-removal process is carried out, usually, at 80-150 °C approximately, preferably 100-130 °C, under ordinary pressure or under decompression in order for the hydrolysis reaction of alkoxy sililyl groups, or in order to subject generated hydroxy sililyl groups to the dehydration condensation reaction with hydroxyl groups on the inorganic filler material's surface, and in order for the removal of generated alcohol or employed solvent. The processing time is usually 4-200 hours approximately, preferably 24-100 hours. Note that the aforementioned organic filler material is such that the same one can be employed for the intermediate layer and superficial layer, or different ones can be employed therefor as well.

In the intermediate layer, it is preferable to include an inorganic filler material in an amount of 100 parts by mass or less when the first resinous composition is taken as 100 parts by mass. When the inorganic filler material is 100 parts by mass or less, the brittleness of the intermediate layer becomes low to show moderate elasticity. On the other hand, when the inorganic filler material is 10 parts by mass or more, the coming-off of the intermediate layer from the substrate becomes less, coming-off which occurs at the cut section in the instance that the slide member of the present invention is cut by means of shearing, and the like, and the linear expansion coefficient lowers so that the respective layers' volumetric changes reduce. A more preferable addition amount of the inorganic filler material can be 10-55 parts by mass, further preferably 15-45 parts by mass, when the resinous composition is taken as 100 parts by mass.

Moreover, in the superficial layer, it is preferable to include the inorganic filler material in an amount of 100 parts by mass or less when the second resinous composition is taken as 100 parts by mass. When the inorganic filler material is 100 parts by mass or less, the brittleness of the superficial layer becomes low to show moderate elasticity. Moreover, by means of the addition of the inorganic filler material, the superficial layer's hardness (pencil hardness) improves, and the linear expansion coefficient lowers so that the respective layers' volumetric changes reduce. A more preferable addition amount of the inorganic filler material can be 10-40 parts by mass, further preferably 15-33 parts by mass, when the polyaryl ketone resin is taken as 100 parts by mass.

The intermediate layer and superficial layer are such that there is no limitation on the thickness especially. When the thickness of the intermediate layer is 0.1-800 µm, the substrate, which is made of a metal, can be adhered onto the superficial layer satisfactorily. When the thickness of the superficial layer is 1-1,000 µm, it becomes the slide member, which is good in terms of the adhesiveness; moreover, which is good in terms of the sliding characteristics. And, when both intermediate layer and superficial layer are such that the thickness thereof is 10-200 µm, the forming is easy in the production process (being described later).

The ratio of the thickness of the intermediate layer to that of the superficial layer can preferably be 1/99-99/1, more preferably be in a range of 10/90-90/10. In a later-described production process, in the instance that the intermediate layer and the superficial layer are formed independently and thereafter both of them are superimposed and then they are bonded onto the substrate, which is made of a metal, when the thickness ratio falls in the aforementioned ranges, such troubles that the thinner layer is pulled toward the thicker layer by means of static electricity so that their positioning becomes difficult to do; and that wrinkles occur are less likely to take place. Moreover, in the case where the intermediate layer and superficial layer are formed while coupling them and laminating them by means of co-extrusion, and then they are bonded with the substrate before cooling or after cooling, when being the aforementioned thickness-ratio range, the respective layers can be formed stably.

Note that, in the slide member of the present invention, although the substrate, which is made of a metal, adheres with the superficial layer, which includes a polyaryl ketone resin, by mean of disposing the intermediate layer satisfactorily, the sliding characteristics, too, improve more than those of the conventional slide member in which a layer, which includes a polyaryl ketone resin, is formed directly onto a substrate. Moreover, when adding an inorganic filler material, since the linear expansion coefficient becomes lower, the adhesiveness improves furthermore, and accordingly the coming-off from the substrate can be suppressed, coming-off which occurs during sliding.

As for a production process for the intermediate layer and superficial layer, which constitute the slide member of the present invention, a method is desirable, method in which they are formed by placing the intermediate layer and superficial layer, which are formed as a desired shape, on the substrate, which is made of a metal, and bonding them therewith (laminating them thereon).

In order to form the intermediate layer, firstly, the resinous composition (a polyether imide resin is labeled a component (A), and a polyaryl ketone resin is labeled a component (B)), and an additive agent, such as an inorganic filler material, (being labeled a component (C)), if necessary, are mixed by a publicly known method, thereby obtaining a mixture. As examples of the mixing combination, the following can be named:
- methods in which three components, the component (A), the component (B) and the component (C), are mixed and dispersed simultaneously;
- methods in which the component (A) and component (B) are mixed in advance, and the component (C) is then mixed with and dispersed in this mixture;
- methods in which the component (C) is mixed with and dispersed in the component (A) or component (B) to prepare a mixture of the component (A) and component (C) or a mixture of the component (B) and component (C), and subsequently the component (B) is mixed with the mixture of the component (A) and component (C) or the component (A) is mixed with the mixture of the component (B) and component (C);
- methods in which mixtures, in which the component (C) is mixed with and dispersed in each of the component (A) and component (B), are prepared, and then these mixtures are mixed (in this case, the ratio of the component (C) to the component (A), and the ratio of the component (C) to the component (B) can be either identical or different);
- in the case of using a plurality of species of the component (A) and/or a plurality of species of the component (B), methods in which a mixture, in which the component (C) is mixed with and dispersed in at least one member of these in a high concentration, is mixed with the other components (A) and/or components (B), which are to be blended, or methods in which the aforementioned mixture is mixed with and dispersed in a mixture, in which the component (C) is mixed with and dispersed in the other components (A) and/or components (B), which are to be blended, in a low concentration; and the like.

Moreover, in order to form the superficial layer, firstly, a polyaryl ketone resin (B) is mixed with an additive, such as a solid lubricant, (being labeled a component (D)), if necessary, mixed by a publicly known method, thereby obtaining a mixture. As examples of the mixing combination, the following can be named:
- methods in which two components, the component (B) and the component (D), are mixed and dispersed simultaneously;
- methods in which a mixture, in which the component (D) is mixed with and dispersed in the component (B) in a high concentration, is prepared in advance and then the component (B) is mixed with and dispersed in this mixture;
- methods in which a plurality of species of mixtures, in which the component (D) is mixed with and dispersed in the component (B) in different concentrations, are prepared in advance and these mixtures are mixed;
- in the case of using a plurality of species of the component (B) and/or a plurality of species of the component (D), methods in which a mixture, in which the component (D) is mixed with and dispersed in at least one member of the component (B) in a high concentration, is mixed with the other components (B), which are to be blended, or methods in which the aforementioned mixture is mixed with and dispersed in a mixture, in which the component (D) is mixed with and dispersed in the other components (B), which are to be blended, in a low concentration; and the like.

As for a mixing and dispersing method, the respective components can be supplied separately to a single-axis molten kneader or a dual-axis molten kneader, respectively; or the respective components can be supplied successively to the molten kneader, using a molten kneader, which has a plurality of supplying units. Moreover, after mixing them preliminarily utilizing a mixing machine, such as a Henschel mixer (article name), a super mixer, a ribbon blender and tumbler, they are supplied to the molten kneader and are then molten kneaded, specifically, at a temperature of 340 °C-430 °C. Moreover, depending on purposes, it is possible as well to mix them by means of wet methods while having them dispersed in an aqueous medium or an organic solvent. Further, such a method can be named, method in which a master batch, in which various additives, such as an inorganic filler material of the component (C) and an solid lubricant of the component (D), are admixed with the component (A) and/or component (B), which are adapted to a base resin, in a high concentration (10-60% by mass approximately as a representative content) is made separately, and this is mixed in an employed resin while adjusting the concentration, and is mixed therewith mechanically using a kneader or an extruder, and the like. Among the aforementioned mixing methods, the method in which a master batch is made and admixed is preferable in view of the dispersibility or workability.

The mixture, subsequent to the step of mixing and dispersing, can be formed as desired configurations; moreover, it can be obtained in conventional forms, such as pellets, granules and powders, which are appropriate for forming processes, by extruding it once as a strand or sheet shape and then cutting it.

As for a forming method for the intermediate layer and superficial layer, publicly know methods, such as injection molding methods, extrusion molding methods, compression molding methods and calender forming methods, can be named. For example, an extrusion casting method, in which a film-shaped resinous composition, which is extruded through a die for film extrusion, die whose cross-sectional configuration is a rectangle or rectangle-like configurations, specifically a T die or an I die, and the like; and is then cooled by contacting it with a cooling body; a calendering method, and so forth, can be adopted; although it is not one which is limited particularly, from the aspect of the film formability, stable producibility, and so forth, of film, an extrusion casting method, in which a die for film extrusion, such as a T die and an I die, and a cooling body are used, is preferable. As for the aforementioned cooling body, those, whose superficial material quality is composed of metals or rubbers, resins, and the like, and whose form is rolls, belts, seamless belts, and so forth, can be named.

Among these, for the reason that the cooling apparatus is simple and easy to handle, it is preferable to use rolls as the cooling body. As one of their examples, a molten resinous composition is fed into a die from an extruder through a conduit pipe, and is extruded as a film shape through the leading end of the die, and is fixed/cooled as a film shape configurationally while being held between a metallic roll for cooling and a rubber roll; subsequently, it is cooled while being wound around on the metallic-roller side, and is then sent to a taking-up machine. The film is further cooled by means of another roll disposed between the metallic roll and the taking-up machine, or coolant air, if necessary.

Although a forming temperature in the extrusion casting method can be adjusted appropriately depending on the flowing characteristics or film formability, and the like, of the compositions, it can roughly be a glass transition temperature or melting point or more, 430 °C or less, preferably 340-400 °C, further preferably 350-390 °C.

A superficial temperature of the cooling body, such as a roll, can usually be a glass transition temperature or melting point or less of the resinous components, which constitute the respective layers. When forming the intermediate layer, the superficial temperature of the cooling body can usually fall in the range of 30-175 °C approximately, preferably 90-165 °C. When being 30 °C or more, it is possible to avoid such an instance that the moisture in air freezes to adhere onto the cooling body's surface; and, when being 175 °C or less, it is possible to prevent such an instance that the configurations, which are formed by means of the contact with the cooling body, change. When forming the superficial layer, the superficial temperature of the cooling body can usually fall in the range of 30-155 °C approximately, preferably 90-141 °C. When being 30 °C or more, it is possible to avoid such an instance that the moisture in air freezes to adhere onto the cooling body's surface; and, when being 155 °C or less, it is possible to prevent such an instance that the configurations, which are formed by means of the contact with the cooling body, change. It can be measured by means of contact methods, in which a thermo couple or temperature indicator is contacted with the cooling body's top surface, non-contact methods, in which light or electromagnetic waves, such as infrared thermometers, are used.

The suitable range of the cooling body's superficial temperature can be controlled by means of appropriately selecting the temperature of the cooling body's temperature controlling mechanism or heat media, the circulating coolants, such as oil and water.

Although the method of laminating the substrate, the intermediate layer and the superficial layer in the instance of producing the laminated body of the present invention is not limited in particular, the following can be named, for instance:
- methods in which the substrate, and the intermediate layer and superficial layer, which have been formed as a film shape in advance, are superimposed and are then laminated by heating them while pressurizing them (press forming);
- methods in which the substrate, and the intermediate layer and superficial layer, which have been formed as a film shape in advance, are heated by means of contacting with heater roll or infrared ray, hot air, and the like, simultaneously or separately, are thereafter superimposed and are then bonded closely while pressurizing them by means of roll or press;
- methods in which a resinous composition, which constitutes the intermediate layer, and a resinous composition, which constitutes the superficial layer, are molten kneaded with separate extruders, respectively, are laminated by separated dies, respectively, or laminated within a multi-layered die, are extruded as a film shape, are placed on the substrate's surface as they are without cooling them, and are then laminated while being held between heating presses or heating rolls along with the substrate;
- methods in which the intermediate layer and superficial layer are extruded as a laminated film, are cooled once, and are thereafter laminated with the substrate while being held between heating presses or heating rolls; and so forth.

As for the substrate, which is made of a metal, it can be in such a state as continuous coils and strip-shaped plates or cut-plate shapes; and, the intermediate layer and superficial layer, too, can be supplied as such a form as continuous windings or cut leaf-shaped sheets. Moreover, it can be metallic component parts, which are processed into sliding component parts for compressors, and the like.

Moreover, a processing temperature when laminating the respective layers can desirably be 200-400 °C. When being 400 °C or less, the deterioration of the substrate member, which is made of a metal, can be reduced. When being 200 °C or more, since the crystallinity of a polyaryl ketone resin, which is included in the superficial layer and intermediate layer, enhances, the specific qualities of the polyaryl ketone resin are demonstrated satisfactorily. In particular, in the substrate, in which iron is adapted to a major component, when the processing temperature is adapted to 250 °C or less, no such instance occurs that the hardened iron is annealed. Moreover, in the substrate, which is composed of an aluminum alloy, when the processing temperature is adapted to 250 °C or less, it is possible to suppress the degradation of the substrate's hardness.

In accordance with the aforementioned methods, in the step of laminating the substrate with the intermediate layer and superficial layer, no solvent can be used. Accordingly, the adverse influences on environments can be reduced. Moreover, since no applying step or calcining step, and the like, is required, they can be finished with a less number of steps.

Note that the slide member of the present invention is not one which is limited to the aforementioned embodiment modes; to the extent that its characteristics are not impaired, the other constructions can be added thereto. For example, the superficial layer and/or the intermediate layer can contain at least one or all of inorganic particles, such as titanium oxide, barium sulfate, calcium carbonate, alumina, silicon oxide, iron oxide and chromium oxide, extreme-pressure agents, such as sulfur-containing metallic compounds such as zinc sulfide (ZnS) or silver sulfide (Ag₂S), coloring agents, such as dyes and pigments, surfactants, dispersing agents, oxidation inhibitors, fire retardants, heat stabilizers, antistatic agents, leveling agents, defoaming agents, crosslinking agents, such as epoxy resins, phenol resins, melamine resins, polyfunctional isocyanate, and the like, as well. Moreover, in order to improve the bonding between the substrate and the intermediate layer, it is possible to employ silane coupling agents, such as amino silane and epoxy, too.

Moreover, the slide member of the present invention, in such a range that does not depart from the spirit or scope of the present invention, can be one which has a layer, which includes the same components as those of the intermediate layer and superficial layer, or a layer, which includes the other components, between the intermediate layer and the superficial layer.

Hereinafter, examples of the slide member of the present invention will be explained along with comparative examples.

[Making of Metallic Substrate]

9 types of metallic substrates from "A1" to "A9" were prepared. Hereinafter, the respective substrates will be explained.

[Substrates "A1"-"A4"]

A substrate "A1," which was a stainless steel plate (SUS304) whose thickness was 0.4 mm, a substrate "A2," which was a stainless steel plate (SUS301) whose thickness was 0.4 mm, a substrate "A3," which was a stainless steel plate (SUS304) whose thickness was 0.5 mm, and a substrate "A4," which was a stainless steel plate (SUS316) whose thickness was 0.3 mm, were prepared. The superficial roughness parameters of the aforementioned substrates "A1"-"A4" were as specified in Table 1 and Table 2.
[Substrates "A5"-"A9"]

A substrate "A5," which was a cast-iron plate whose thickness was 4 mm, a substrate "A6," which was a cast-iron plate whose thickness was 6 mm, a substrate "A7," which was a cast-iron plate whose thickness was 10 mm, a substrate "A8," which was an aluminum plate (A1100 prescribed in JIS H4000-1999; 0.7% silicon content) whose thickness was 8 mm, and a substrate "A9," which was an aluminum plate (A4043 prescribed in the same; 5.5% silicon content) whose thickness was 6 mm, were prepared. Note that the substrates "A5"-"A9" were surface-treated by means of shot blasting, and the superficial roughness parameters of the surface-treated surfaces of the aforementioned substrates "A1"-"A4" were as specified in Table 3 and Table 4.

[Making of Intermediate Layer]

By the following procedure, films "S1"-"S13" for intermediate layer were made.

[Film "S1"]

As a resinous composition, an amorphous polyetherimide resin ("Ultem 1000" produced by GENERAL ELECTRIC Corp., glass transition temperature Tg = 216 °C, and hereinafter abbreviated to as "PEI-1") was used in an amount of 2.016 kg (28% by mass with respect to the summed mass of PEI-1, PEI-2 and PEEK-1); a polyetherimide resin ("Ultem CRS5001" produced by GENERAL ELECTRIC Corp., Tg = 226 °C, and hereinafter abbreviated to as "PEI-2") was used in an amount of 2.304 kg (32% by mass with respect to the summed mass of PEI-1, PEI-2 and PEEK-1) ; and a polyether ether ketone resin ("PEEK 450G" produced by VICTREX Corp., Tg = 143 °C, melting point Tm = 334 °C, and hereinafter abbreviated to as "PEEK-1") was used in an amount of 2.88 kg (40% by mass with respect to the summed mass of PEI-1, PEI-2 and PEEK-1). Moreover, as a filler material, synthetic mica (average particle diameter: 6 µm, and aspect ratio: 25) was added in an amount of 2.8 kg (38.9 parts by mass with respect to summed 100 parts by mass of PEI-1, PEI-2 and PEEK-1, and hereinafter abbreviated to as "filler material C1"). The aforementioned resinous composition and filler material were kneaded at a set temperature of 380 °C by means of a dual-axis extruder provided with a side feed, were extruded as a strand shape, and were turned into pellets by cutting.

After hot-air drying the pellets at 180 °C for 12 hours, they were extruded as a film shape at 380 °C, employing a 40-mm-φ-nozzle-diameter single-axis extruder with a T die connected; and were cooled rapidly to form a film by contacting them with the surface of a metallic cast roll, which was temperature controlled by a circulating oil whose set temperature was 160 °C, and then pressing them onto a silicone rubber roll from the opposite side thereof, thereby obtaining a 100-µm-thickness film "S1" for the intermediate layer.

[Film "S2"]

Except that PEI-1 was altered to 4.4 kg (55% by mass with respect to the summed mass of PEI-1 and PEEK-1), PEI-2 was altered to 0 kg, and PEEK-1 was altered to 3.6 kg (45% by mass with respect to the summed mass of PEI-1 and PEEK-1), moreover, filler material "C1" was altered to 0 kg; surface-treated mica (filler material "C2"), which was made by means of the following method, was added in an amount of 2 kg (25 parts by mass with respect to summed 100 parts by mass of PEI-1 and PEEK-1); and the film thickness was adapted to 35 µm, the same operations as those of film "S1" were carried out, thereby obtaining film "S2."

Note that the aforementioned surface-treated mica was made by means of the following method. Onto 2-kg commercially available synthetic mica (average particle diameter: 10 µm, and aspect ratio: 20), a 20%-by-mass solution was sprinkled in an amount of 200 g, solution which was obtained by solving hexyltrimethoxy silane (produced by TOKYO KASEI KOGYO Co., Ltd., and reagent grade), a surface-treating agent which was solved into 160-g isopropyl alcohol with a water content of about 3%-by-mass moisture, into it in an amount of 40 g (2 parts by weight with respect to 100-parts-by-mass synthetic mica); and was stirred to mix therewith by means of a Henschel mixer for 10 minutes while supplying nitrogen. This mixture was spread over a vat, which was made of a stainless steel, and was left indoors for 4 days. Thereafter, it was heat treated in a 120-°C oven for 48 hours, and was then cooled to room temperature, thereby carrying out a surface treatment to the mica. This operation was repeated 10 times, thereby obtaining surface-treated mica (hereinafter abbreviated to as "filler material C2") in an amount of about 20 kg.

[Film "S3"]

Except that PEI-1 was altered to 3.04 kg (40% by mass with respect to the summed mass of PEI-1, PEI-2 and PEEK-1), PEI-2 was altered to 1.9 kg (25% by mass with respect to the summed mass of PEI-1, PEI-2 and PEEK-1), and PEEK-1 was altered to 2.66 kg (35% by mass with respect to the summed mass of PEI-1, PEI-2 and PEEK-1), moreover, filler material "C1" was altered to 0 kg; filler material "C2" was added in an amount of 2.4 kg (31.6 parts by mass with respect to summed 100 parts by mass of PEI-1, PEI-2 and PEEK-1); and the film thickness was adapted to 80 µm, the same operations as those of film "S1" were carried out, thereby obtaining film "S3."

[Film "S4"]

Except that PEI-1 was altered to 3.28 kg (40% by mass with respect to the summed mass of PEI-1, PEI-2 and PEEK-1), PEI-2 was altered to 2.87 kg (35% by mass with respect to the summed mass of PEI-1, PEI-2 and PEEK-1), and PEEK-1 was altered to 2.05 kg (25% by mass with respect to the summed mass of PEI-1, PEI-2 and PEEK-1), moreover, filler material "C1" was altered to 0 kg; surface-treated mica (filler material "C3"), which was made by means of the following method, was added in an amount of 1.8 kg (22 parts by mass with respect to summed 100 parts by mass of PEI-1, PEI-2 and PEEK-1); and the film thickness was adapted to 50 µm, the same operations as those of film "S1" were carried out, thereby obtaining film "S4."

Note that the aforementioned surface-treated mica was made by means of the following method. Onto 2-kg commercially available synthetic mica (average particle diameter: 6 µm, and aspect ratio: 25), a 20%-by-mass solution was sprinkled in an amount of 200 g, solution which was obtained by solving hexyltrimethoxy silane (produced by TOKYO KASEI KOGYO Co., Ltd., and reagent grade), a surface-treating agent which was solved into 160-g isopropyl alcohol with a water content of about 3%-by-mass moisture, into it in an amount of 40 g (2 parts by weight with respect to 100-parts-by-mass synthetic mica); and was stirred to mix therewith by means of a Henschel mixer for 10 minutes while supplying nitrogen. This mixture was spread over a vat, which was made of a stainless steel, and was left indoors for 4 days. Thereafter, it was heat treated in a 120-°C oven for 48 hours, and was then cooled to room temperature, thereby carrying out a surface treatment to the mica. A similar operation was repeated 30 times, thereby obtaining surface-treated mica (hereinafter abbreviated to as "filler material C3") in an amount of about 60 kg.

[Film "S5"]

Except that PEI-1 was altered to 2.25 kg (30% by mass with respect to the summed mass of PEI-1, PEI-2 and PEEK-1), PEI-2 was altered to 2.25 kg (30% by mass with respect to the summed mass of PEI-1, PEI-2 and PEEK-1), and PEEK-1 was altered to 3.0 kg (40% by mass with respect to the summed mass of PEI-1, PEI-2 and PEEK-1), moreover, filler material "C1" was altered to 0 kg; filler material "C3" was added in an amount of 2. 5 kg (33. 3 parts by mass with respect to summed 100 parts by mass of PEI-1, PEI-2 and PEEK-1); and the film thickness was adapted to 50 µm, the same operations as those of film "S1" were carried out, thereby obtaining film "S5."

[Film "S6"]

Except that PEI-1 was altered to 4.4 kg (55% by mass with respect to the summed mass of PEI-1 and PEEK-1), PEI-2 was altered to 0 kg, and PEEK-1 was altered to 3.6 kg (45% by mass with respect to the summed mass of PEI-1 and PEEK-1), moreover, filler material "C1" was altered to 0 kg; filler material "C3" was added in an amount of 2 kg (25 parts by mass with respect to summed 100 parts by mass of PEI-1, PEI-2 and PEEK-1) ; and the film thickness was adapted to 28 µm, the same operations as those of film "S1" were carried out, thereby obtaining film "S6."

[Film "S7"]

Except that PEI-1 was altered to 3.2 kg (40% by mass with respect to the summed mass of PEI-1, PEI-2 and PEEK-1), PEI-2 was altered to 2.4 kg (30% by mass with respect to the summed mass of PEI-1, PEI-2 and PEEK-1), and PEEK-1 was altered to 2.4 kg (30% by mass with respect to the summed mass of PEI-1, PEI-2 and PEEK-1), moreover, filler material "C1" was altered to 0 kg; filler material "C3" was added in an amount of 2 kg (25 parts by mass with respect to summed 100 parts by mass of PEI-1, PEI-2 and PEEK-1); and the film thickness was adapted to 24 µm, the same operations as those of film "S1" were carried out, thereby obtaining film "S7."

[Film "S8"]

As a resinous composition, PEI-1 was used in an amount of 3 kg (30% by mass with respect to the summed mass of PEI-1, PEI-2 and PEEK-1); PEI-2 was used in an amount of 3 kg (30% by mass with respect to the summed mass of PEI-1, PEI-2 and PEEK-1); and PEEK-1 was used in an amount of 4 kg (40% by mass with respect to the summed mass of PEI-1, PEI-2 and PEEK-1). Moreover, as a filler material, filler material "C2" was added in an amount of 1.5 kg (15 parts by mass with respect to summed 100 parts by mass of PEI-1, PEI-2 and PEEK-1); and, as solid lubricants, a polytetrafluoroethylene resin ("Fluon PTFE L-169J" produced by ASAHI GARASU Co., Ltd., and hereinafter abbreviated to as "solid lubricant D1") was added in an amount of 1.5 kg (15 parts by mass with respect to summed 100 parts by mass of PEI-1, PEI-2 and PEEK-1), and scaly graphite ("Extra CP" produced by NIHON KOKUEN Co., Ltd., an average-particle-diameter measured value under microscope being 6 µm, and hereinafter abbreviated to as "solid lubricant D2") was added in an amount of 1 kg (10 parts by mass with respect to summed 100 parts by mass of PEI-1, PEI-2 and PEEK-1). The aforementioned resinous composition, filler material and solid lubricants were kneaded at a set temperature of 390 °C by means of a dual-axis extruder provided with a side feed, were extruded as a strand shape, and were turned into pellets by cutting.

Except that, after hot-air drying the pellets at 180 °C for 12 hours, the extrusion temperature was adapted to 390 °C; and the film thickness was adapted to 50 µm, film "S8" was obtained by means of the same procedure as that of film "S1."

[Film "S9"]

As a resinous composition, PEI-1 was used in an amount of 3 kg (30% by mass with respect to the summed mass of PEI-1, PEI-2 and PEEK-1) ; PEI-2 was used in an amount of 3 kg (30% by mass with respect to the summed mass of PEI-1, PEI-2 and PEEK-1); and PEEK-1 was used in an amount of 4 kg (40% by mass with respect to the summed mass of PEI-1, PEI-2 and PEEK-1). These pellets were stirred and admixed fully; and, after drying them at 180 °C for 8 hours, they were supplied to a 40-mm-φ-nozzle-diameter single-axis extruder.

Except that the film thickness was adapted to 50 µm, film "S9" was obtained by means of the same procedure as that of film "S1."

[Film "S10"]

Except that PEI-1 was altered to 5.5 kg (55% by mass with respect to the summed mass of PEI-1 and PEEK-1), PEI-2 was altered to 0 kg, and PEEK-1 was altered to 4.5 kg (45% by mass with respect to the summed mass of PEI-1 and PEEK-1), moreover, filler material "C1" was altered to 0 kg; solid lubricant "D1" was added in an amount of 0.5 kg (5 parts by mass with respect to summed 100 parts by mass of PEI-1 and PEEK-1), and solid lubricant "D2" was added in an amount of 0.5 kg (5 parts by mass with respect to summed 100 parts by mass of PEI-1 and PEEK-1); the dual-axis-extrusion temperature and single-axis-extrusion temperature were adapted to 390 °C; and the film thickness was adapted to 25 µm, film "S10" was obtained by means of the same operations as those of film "S1."

[Film "S11"]

Except that PEI-1 was altered to 3 kg (30% by mass with respect to the summed mass of PEI-1, PEI-2 and PEEK-1), PEI-2 was altered to 3 kg (30% by mass with respect to the summed mass of PEI-1, PEI-2 and PEEK-1), and PEEK-1 was altered to 4 kg (40% by mass with respect to the summed mass of PEI-1, PEI-2 and PEEK-1), moreover, filler material "C1" was altered to 0 kg; filler material "C3" was added in an amount of 1 kg (10 parts by mass with respect to summed 100 parts by mass of PEI-1, PEI-2 and PEEK-1), and solid lubricant "D1" was added in an amount of 0.5 kg (5 parts by mass with respect to summed 100 parts by mass of PEI-1, PEI-2 and PEEK-1), and solid lubricant "D2" was added in an amount of 1 kg (10 parts by mass with respect to summed 100 parts by mass of PEI-1, PEI-2 and PEEK-1); and the film thickness was adapted to 30 µm, film "S11" was obtained by means of the same operations as those of film "S1."

[Film "S12"]

Except that PEI-1 was altered to 4 kg (40% by mass with respect to the summed mass of PEI-1, PEI-2 and PEEK-1), PEI-2 was altered to 3 kg (30% by mass with respect to the summed mass of PEI-1, PEI-2 and PEEK-1), and PEEK-1 was altered to 3 kg (30% by mass with respect to the summed mass of PEI-1, PEI-2 and PEEK-1), moreover, filler material "C1" was altered to 0 kg; filler material "C3" was added in an amount of 1.5 kg (15 parts by mass with respect to summed 100 parts by mass of PEI-1, PEI-2 and PEEK-1), and solid lubricant "D1" was added in an amount of 1.5 kg (15 parts by mass with respect to summed 100 parts by mass of PEI-1, PEI-2 and PEEK-1); the dual-axis-extrusion temperature and single-axis-extrusion temperature were adapted to 390 °C; and the film thickness was adapted to 28 µm, the same operations as those of film "S1" were carried out, thereby obtaining film "S12."

[Film "S13"]

Except that PEI-1 was altered to 3 kg (30% by mass with respect to the summed mass of PEI-1, PEI-2 and PEEK-1), PEI-2 was altered to 3 kg (30% by mass with respect to the summed mass of PEI-1, PEI-2 and PEEK-1), and PEEK-1 was altered to 4 kg (40% by mass with respect to the summed mass of PEI-1, PEI-2 and PEEK-1), moreover, filler material "C1" was altered to 0 kg; filler material "C3" was added in an amount of 2.5 kg (25 parts by mass with respect to summed 100 parts by mass of PEI-1, PEI-2 and PEEK-1) ; the dual-axis-extrusion temperature and single-axis-extrusion temperature were adapted to 390 °C; and the film thickness was adapted to 40 µm, the same operations as those of film "S1" were carried out, thereby obtaining film "S13."

[Making of Superficial Layer]

Films "T1"-"T13" for superficial layer, and film "TR1" therefor were made by the following procedure.

[Film "T1"]

To 7.2-kg PEEK-1 (100 parts by mass), filler material "C1" was added in an amount of 2.8 kg (38.9 parts by mass with respect to 100-parts-by-mass PEEK-1), was kneaded at a set temperature of 390 °C using a dual-axis extruder provided with a side feed, was extruded as a strand shape, and was turned into pellets by cutting.

After hot-air drying the pellets at 180 °C for 12 hours, they were extruded as a film shape at 390 °C employing a 40-mm-φ-nozzle-diameter single-axis extruder with a T die connected; and were cooled rapidly to form a film by contacting them with the surface of a metallic cast roll, which was temperature controlled by a circulating oil whose set temperature was 130 °C, and then pressing them onto a silicone rubber roll from the opposite side thereof, thereby obtaining an about-110-µm-thickness film "T1."

[Film "T2"]

Apart from altering PEEK-1 to 7.6 kg (100 parts by mass) and altering filler material "C1" to 0 kg; adding filler material "C2" in an amount of 2.4 kg (31.6 parts by mass with respect to 100-parts-by-mass PEEK-1); and adapting the film thickness to 40 µm, the same operations as those of film "T1" were carried out, thereby obtaining film "T2."

[Film "T3"]

Apart from altering filler material "C1" to 0 kg (that is, employing only PEEK-1); not carrying out the kneading by means of the dual-axis extruder; and adapting the film thickness to 30 µ m, the same operations as those of film "T1" were carried out, thereby obtaining film "T3."

[Film "T4"]

Apart from altering PEEK-1 to 8.2 kg (100 parts by mass) and altering filler material "C1" to 0 kg; adding filler material "C3" in an amount of 1.8 kg (22 parts by mass with respect to 100-parts-by-mass PEEK-1); and adapting the film thickness to 70 µm, the same operations as those of film "T1" were carried out, thereby obtaining film "T4."

[Film "T5"]

Apart from altering PEEK-1 to 7.5 kg (100 parts by mass) and altering filler material "C1" to 0 kg; adding filler material "C3" in an amount of 2.5 kg (33.3 parts by mass with respect to 100-parts-by-mass PEEK-1); and adapting the film thickness to 50 µm, the same operations as those of film "T1" were carried out, thereby obtaining film "T5."

[Film "T6"]

Apart from altering filler material "C1" to 0 kg; adding solid lubricant "D1" in an amount of 2 kg (25 parts by mass with respect to 100-parts-by-mass PEEK-1); and adapting the film thickness to 60 µm, the same operations as those of film "T1" were carried out, thereby obtaining film "T6."

[Film "T7"]

Apart from altering PEEK-1 to 8.33 kg (100 parts by mass) and altering filler material "C1" to 0 kg; adding solid lubricant "D2" in an amount of 1.67 kg (20 parts by mass with respect to 100-parts-by-mass PEEK-1); and adapting the film thickness to 100 µm, the same operations as those of film "T1" were carried out, thereby obtaining film "T7."

[Film "T8"]

Apart from altering PEEK-1 to 10 kg (100 parts by mass) and altering filler material "C1" to 0 kg; adding filler material "C3" in an amount of 1 kg (10 parts by mass with respect to 100-parts-by-mass PEEK-1), adding solid lubricant "D1" in an amount of 2 kg (20 parts by mass with respect to 100-parts-by-mass PEEK-1), and adding solid lubricant "D2" in an amount of 1 kg (10 parts by mass with respect to 100-parts-by-mass PEEK-1); and adapting the film thickness to 35 µm, the same operations as those of film "T1" were carried out, thereby obtaining film "T8."

[Film "T9"]

Except that PEEK-1 was altered to 10 kg, and filler material "C1" was altered to 0 kg (that is, employing only PEEK-1) ; the kneading by means of the dual-axis extruder was not carried out; and the film thickness was adapted to 50 µm, the same operations as those of film "T1" were carried out, thereby obtaining film "T9."

[Film "T10"]

Apart from altering PEEK-1 to 10 kg (100 parts by mass), and altering filler material "C1" to 0 kg; adding solid lubricant "D1" in an amount of 2.5 kg (25 parts by mass with respect to 100-parts-by-mass PEEK-1); and adapting the thickness to 60 µm, film "T10" was obtained by means of the same operations as those of film "T1."

[Film "T11"]

Except that PEEK-1 was altered to 10 kg (100 parts by mass), and filler material "C1" was altered to 0 kg; filler material "C3" was added in an amount of 1 kg (10 parts by mass with respect to 100-parts-by-mass PEEK-1), solid lubricant "D1" was added in an amount of 2 kg (20 parts by mass with respect to 100-parts-by-mass PEEK-1), and solid lubricant "D2" was added in an amount of 1 kg (10 parts by mass with respect to 100-parts-by-mass PEEK-1); and the thickness was adapted to 40 µm, film "T11" was obtained by means of the same operations as those of film "T1."

[Film "T12"]

Except that PEEK-1 was altered to 10 kg (100 parts by mass), and filler material "C1" was altered to 0 kg; filler material "C3" was added in an amount of 1.5 kg (15 parts by mass with respect to 100-parts-by-mass PEEK-1), and solid lubricant "D1" was added in an amount of 2 kg (20 parts by mass with respect to 100-parts-by-mass PEEK-1); and the thickness was adapted to 60 µm, the same operations as those of film "T1" were carried out, thereby obtaining film "T12."

[Film "T13"]

Except that PEEK-1 was altered to 10 kg (100 parts by mass), and filler material "C1" was altered to 0 kg; filler material "C3" was added in an amount of 0.5 kg (5 parts by mass with respect to 100-parts-by-mass PEEK-1), solid lubricant "D2" was added in an amount of 0.5 kg (5 parts by mass with respect to 100-parts-by-mass PEEK-1), and a polytetrafluoroethylene resin ("Polyfluon TFEL-5" produced by DAIKIN KOGYO Co., Ltd., and hereinafter abbreviated to as "solid lubricant D3") was added in an amount of 2 kg (20 parts by mass with respect to 100-parts-by-mass PEEK-1); and the thickness was adapted to 70 µm, the same operations as those of film "T1" were carried out, thereby obtaining film "T13."

[Film "TR1"]

Apart from altering the thickness to 110 µm, film "TR1" was made by means of the same operations as those of film "T9."

[Making of Laminated Film]

Laminated films "ST1"-"ST6" were made by the following procedure.

[Laminated Film "ST1"]

As a resinous composition, PEI-1 was used in an amount of 2.8 kg (28% by mass with respect to the summed mass of PEI-1, PEI-2 and PEEK-1); PEI-2 was used in an amount of 3 kg (30% by mass with respect to the summed mass of PEI-1, PEI-2 and PEEK-1) ; and PEEK-1 was used in an amount of 4.2 kg (42% by mass with respect to the summed mass of PEI-1, PEI-2 and PEEK-1). Moreover, filler material "C2" was added in an amount of 2.5 kg (25 parts by mass with respect to summed 100 parts by mass of PEI-1, PEI-2 and PEEK-1). The aforementioned resinous composition and filler material were kneaded at a set temperature of 380 °C using a dual-axis extruder provided with a side feed, were extruded as a strand shape, and were turned into pellets by cutting. The pellets were hot-air dried at 180 °C for 8 hours, and were extruded as an intermediate layer through a multi-manifold type die (set temperature: 390 °C), to which a 30-mm-φ-nozzle-diameter single-axis extruder, being set at 390 °C, was connected.

Moreover, after hot-air drying the pellets of PEEK-1 at 180°C for 8 hours, they were extruded as a superficial layer through the aforementioned multi-manifold die (set temperature: 390 °C), to which a 40-mm-φ-nozzle-diameter single-axis extruder, being set at 390 °C, was connected, simultaneously with the intermediate layer (co-extrusion), thereby obtaining laminated film "ST1" in which the intermediate layer and the superficial layer were laminated.

In this instance, the discharge amounts of the molten resins were adjusted so that the thickness ratio of the intermediate layer to the superficial layer became 16: 84. The intermediate-layer side of this laminated film was cooled rapidly with a 125 °C casting roll, and a silicone rubber roll was pressed onto the superficial-layer side. Further, the silicone rubber roll was cooled by pressing a hard chromium-plated roll, which was disposed on the opposite side of a metallic roll and which was cooled with about-35 °C water; and thereafter it was taken up. The discharge amounts of the molten resins and line speeds were adjusted so that the thickness of the laminated film became 50 µm.

Note that, when the cross section of obtained laminated film "ST1" was enlarged by means of a microscope to observe and measure the thickness of the respective layers, the thickness of the intermediate layer was 8 µm, and the thickness of the superficial layer was 42 µm.

[Laminated Film "ST2"]

As a resinous composition, PEI-1 was used in an amount of 6 kg (60% by mass with respect to the summed mass of PEI-1 and PEEK-1); and PEEK-1 was used in an amount of 4 kg (40% by mass with respect to the summed mass of PEI-1 and PEEK-1). Moreover, filler material "C3" was added in an amount of 1.5 kg (15 parts by mass with respect to summed 100 parts by mass of PEI-1 and PEEK-1); and solid lubricant "D1" was added in an amount of 1. 5 kg (15 parts by mass with respect to summed 100 parts by mass of PEI-1 and PEEK-1). The resinous composition, filler material and solid lubricant were kneaded at a set temperature of 390 °C using a dual-axis extruder provided with a side feed, were extruded as a strand shape, and were turned into pellets by cutting. The pellets were hot-air dried at 180 °C for 8 hours, and were extruded as an intermediate layer through a multi-manifold type die (set temperature: 390 °C), to which a 30-mm-φ-nozzle-diameter single-axis extruder, being set at 390 °C, was connected

Moreover, to 10-kg PEEK-1 (100 parts by mass), filler material "C3" was added in an amount of 0.8 kg (8 parts by mass with respect to 100-parts-by-mass PEEK-1), and solid lubricant "D1" was added in an amount of 2.5 kg (25 parts by mass with respect to 100-parts-by-mass PEEK-1); were kneaded at a set temperature of 390 °C using a dual-axis extruder provided with a side feed, were extruded as a strand shape, and were turned into pellets by cutting. The pellets were hot-air dried at 180°C for 8 hours, and were extruded as a superficial layer through the aforementioned multi-manifold die (set temperature: 390 °C), to which a 40-mm-φ-nozzle-diameter single-axis extruder, being set at 390 °C, was connected.

By the same procedure as that of laminated film "ST1," the intermediate layer and superficial layer were co-extruded, thereby obtaining laminated film "ST2." In this instance, the discharge amounts of the molten resins and line speeds were adjusted so that the thickness ratio of the intermediate layer to the superficial layer became 14:86 and the thickness of the laminated film became 105 µm.

Note that, when the cross section of obtained laminated film "ST2" was enlarged by means of a microscope to observe and measure the thickness of the respective layers, the thickness of the intermediate layer was 15 µm, and the thickness of the superficial layer was 90 µm.

[Laminated Film "ST3"]

As a resinous composition, PEI-1 was used in an amount of 6 kg (60% by mass with respect to the summed mass of PEI-1, PEI-2 and PEEK-1) ; PEI-2 was used in an amount of 1. 5 kg (15% by mass with respect to the summed mass of PEI-1, PEI-2 and PEEK-1); and PEEK-1 was used in an amount of 2.5 kg (25% by mass with respect to the summed mass of PEI-1, PEI-2 and PEEK-1). Moreover, filler material "C3" was added in an amount of 1.5 kg (15 parts by mass with respect to summed 100 parts by mass of PEI-1, PEI-2 and PEEK-1) ; and solid lubricant "D2" was added in an amount of 1 kg (10 parts by mass with respect to summed 100 parts by mass of PEI-1, PEI-2 and PEEK-1). The resinous composition, filler material and solid lubricant were kneaded at a set temperature of 390 °C using a dual-axis extruder provided with a side feed, were extruded as a strand shape, and were turned into pellets by cutting. The pellets were hot-air dried at 180 °C for 8 hours, and were extruded as an intermediate layer through a multi-manifold type die (set temperature: 390°C), to which a 30-mm-φ-nozzle-diameter single-axis extruder, being set at 390 °C, was connected.

Moreover, to 10-kg PEEK-1 (100 parts by mass), filler material "C3" was added in an amount of 1.0 kg (10 parts by mass with respect to 100-parts-by-mass PEEK-1), solid lubricant "D1" was added in an amount of 2 kg (20 parts by mass with respect to 100-parts-by-mass PEEK-1), and solid lubricant "D2" was added in an amount of 1 kg (10 parts by mass with respect to 100-parts-by-mass PEEK-1); were kneaded at a set temperature of 390 °C using a dual-axis extruder provided with a side feed, were extruded as a strand shape, and were turned into pellets by cutting. The pellets were hot-air dried at 180 °C for 8 hours, and were extruded as a superficial layer through the aforementioned multi-manifold die (set temperature: 390 °C), to which a 30-mm-φ-nozzle-diameter single-axis extruder, being set at 390 °C, was connected.

By the same procedure as that of laminated film "ST1," the intermediate layer and superficial layer were co-extruded, thereby obtaining laminated film "ST3." In this instance, the discharge amounts of the molten resins and line speeds were adjusted so that the thickness ratio of the intermediate layer to the superficial layer became 43:57 and the thickness of the laminated film became 70 µm.

Note that, when the cross section of obtained laminated film "ST3" was enlarged by means of a microscope to observe and measure the thickness of the respective layers, the thickness of the intermediate layer was 40 µm, and the thickness of the superficial layer was 30 µm.

[Laminated Film "ST4"]

As a resinous composition, PEI-1 was used in an amount of 3.5 kg (35% by mass with respect to the summed mass of PEI-1, PEI-2 and PEEK-1); PEI-2 was used in an amount of 3 kg (30% by mass with respect to the summed mass of PEI-1, PEI-2 and PEEK-1); and PEEK-1 was used in an amount of 3.5 kg (35% by mass with respect to the summed mass of PEI-1, PEI-2 and PEEK-1). After mixing and stirring these pellets fully, they were hot-air dried at 180 °C for 8 hours, and were extruded as an intermediate layer through a multi-manifold type die (set temperature: 390 °C), to which a 30-mm-φ-nozzle-diameter single-axis extruder, being set at 390 °C, was connected.

Moreover, to 10-kg PEEK-1 (100 parts by mass), filler material "C3" was added in an amount of 1 kg (10 parts by mass with respect to 100-parts-by-mass PEEK-1), solid lubricant "D1" was added in an amount of 2 kg (20 parts by mass with respect to 100-parts-by-mass PEEK-1), and solid lubricant "D2" was added in an amount of 0.5 kg (5 parts by mass with respect to 100-parts-by-mass PEEK-1); were kneaded at a set temperature of 390 °C using a dual-axis extruder provided with a side feed, were extruded as a strand shape, and were turned into pellets by cutting. The pellets were hot-air dried at 180 °C for 8 hours, and were extruded as a superficial layer through the aforementioned multi-manifold die (set temperature: 390 °C), to which a 30-mm-φ-nozzle-diameter single-axis extruder, being set at 390 °C, was connected.

By the same procedure as that of laminated film "ST1," the intermediate layer and superficial layer were co-extruded, thereby obtaining laminated film "ST4." In this instance, the discharge amounts of the molten resins and line speeds were adjusted so that the thickness ratio of the intermediate layer to the superficial layer became 24:76 and the thickness of the laminated film became 34 µm.

Note that, when the cross section of obtained laminated film "ST4" was enlarged by means of a microscope to observe and measure the thickness of the respective layers, the thickness of the intermediate layer was 8 µm, and the thickness of the superficial layer was 26 µm.

[Laminated Film "ST5"]

As a resinous composition, PEI-1 was used in an amount of 5.8 kg (58% by mass with respect to the summed mass of PEI-1 and PEEK-1); and PEEK-1 was used in an amount of 4.2 kg (42% by mass with respect to the summed mass of PEI-1 and PEEK-1). Moreover, filler material "C3" was added in an amount of 1.5 kg (15 parts by mass with respect to summed 100 parts by mass of PEI-1 and PEEK-1); and solid lubricant "D1" was added in an amount of 1 kg (10 parts by mass with respect to summed 100 parts by mass of PEI-1 and PEEK-1). The resinous composition, filler material and solid lubricant were kneaded at a set temperature of 390 °C using a dual-axis extruder provided with a side feed, were extruded as a strand shape, and were turned into pellets by cutting. The pellets were hot-air dried at 180 °C for 8 hours, and were extruded as an intermediate layer through a multi-manifold type die (set temperature: 390°C), to which a 30-mm-φ-nozzle-diameter single-axis extruder, being set at 390 °C, was connected.

Moreover, to 10-kg PEEK-1 (100 parts by mass), solid lubricant "D1" was added in an amount of 2.5 kg (25 parts by mass with respect to 100-parts-by-mass PEEK-1); was kneaded at a set temperature of 390 °C using a dual-axis extruder provided with a side feed, was extruded as a strand shape, and was turned into pellets by cutting. The pellets were hot-air dried at 180 °C for 8 hours, and were extruded as a superficial layer through the aforementioned multi-manifold die (set temperature: 390 °C), to which a 40-mm-φ-nozzle-diameter single-axis extruder, being set at 390 °C, was connected.

By the same procedure as that of laminated film "ST1," the intermediate layer and superficial layer were co-extruded, thereby obtaining laminated film "ST5." In this instance, the discharge amounts of the molten resins and line speeds were adjusted so that the thickness ratio of the intermediate layer to the superficial layer became 14:86 and the thickness of the laminated film became 105 µm.

Note that, when the cross section of obtained laminated film "ST5" was enlarged by means of a microscope to observe and measure the thickness of the respective layers, the thickness of the intermediate layer was 15 µm, and the thickness of the superficial layer was 90 µm.

[Laminated Film "ST6"]

As a resinous composition, PEI-1 was used in an amount of 6 kg (60% by mass with respect to the summed mass of PEI-1, PEI-2 and PEEK-1); PEI-2 was used in an amount of 1. 5 kg (15% by mass with respect to the summed mass of PEI-1, PEI-2 and PEEK-1) ; and PEEK-1 was used in an amount of 2.5 kg (25% by mass with respect to the summed mass of PEI-1, PEI-2 and PEEK-1). Moreover, filler material "C3" was added in an amount of 1.5 kg (15 parts by mass with respect to summed 100 parts by mass of PEI-1, PEI-2 and PEEK-1); and solid lubricant "D2" was added in an amount of 1 kg (10 parts by mass with respect to summed 100 parts by mass of PEI-1, PEI-2 and PEEK-1). The resinous composition, filler material and solid lubricant were kneaded at a set temperature of 390 °C using a dual-axis extruder provided with a side feed, were extruded as a strand shape, and were turned into pellets by cutting. The pellets were hot-air dried at 180 °C for 8 hours, and were extruded as an intermediate layer through a multi-manifold type die (set temperature: 390°C), to which a 30-mm-φ-nozzle-diameter single-axis extruder, being set at 390 °C, was connected.

Moreover, to 10-kg PEEK-1 (100 parts by mass), filler material "C3" was added in an amount of 0.5 kg (5 parts by mass with respect to 100-parts-by-mass PEEK-1), solid lubricant "D1" was added in an amount of 2 kg (20 parts by mass with respect to 100-parts-bymass PEEK-1), and solid lubricant "D2" was added in an amount of 0. 5 kg (5 parts by mass with respect to 100-parts-by-mass PEEK-1); were kneaded at a set temperature of 390 °C using a dual-axis extruder provided with a side feed, were extruded as a strand shape, and were turned into pellets by cutting. The pellets were hot-air dried at 180 °C for 8 hours, and were extruded as a superficial layer through the aforementioned multi-manifold die (set temperature: 390 °C), to which a 30-mm-φ-nozzle-diameter single-axis extruder, being set at 390 °C, was connected.

By the same procedure as that of laminated film "ST1," the intermediate layer and superficial layer were co-extruded, thereby obtaining laminated film "ST6." In this instance, the discharge amounts and line speeds of the molten resins were adjusted so that the thickness ratio of the intermediate layer to the superficial layer became 57:43 and the thickness of the laminated film became 70 µm.

Note that, when the cross section of obtained laminated film was enlarged by means of a microscope to observe and measure the thickness of the respective layers, the thickness of the intermediate layer was 40 µm, and the thickness of the superficial layer was 30 µm.

[Making of Slide Member]

Using aforementioned films "S1"-"S13," "T1"-"T13" and "ST1"-"ST6," slide members from Sample No. 1 to No. 21 were made. Moreover, for comparison, Sample No. 1' and Sample No. 3' were made. The making procedure will be hereinafter specified.

[Sample No. 1]

Those, which were superimposed on each other in the following order; were set within a high-performance high-temperature vacuum press forming machine (a molding press, "VH1-1747," produced by KITAGAWA SEIKI Co., Ltd.); and were then press formed at a set maximum temperature of 360 °C, for a set maximum-temperature holding time of 20 minutes and under a set pressure of 9.7 MPa (the pressure between (4) and (5), set forth below, was about 3.9 MPa); and thereby Sample No. 1, which comprised a substrate and a sliding layer (an intermediate layer and a superficial layer), was obtained.

(1) A cushioning paper ("RA Board RABN0016" produced by MITSUBISHI SEISHI Co., Ltd.), both of whose opposite surfaces were covered with a 35-µm copper foil, which was formed as a square whose sides were about 30 cm, and whose thickness was 1.6 mm; (2) a 2-mm-thickness stainless steel plate, which was formed as a square whose sides were about 30 cm; (3) a polyimide film ("Upilex 50S" produced by UBE KOSAN Co., Ltd.), which was formed as a rectangle whose length was 30 cm, width was 25 cm and thickness was 50 µ m; (4) substrate "A1," which was processed as a square whose sides were 22 cm; (5) film "S1" (intermediate layer), which was processed as a square whose sides were 24 cm; (6) film "T1" (superficial layer), which was processed as a square whose sides were 24 cm; (7) the same polyimide film as aforementioned (3); (8) the same stainless plate as aforementioned (2); and (9) the same cushioning paper as aforementioned (1).

Aforementioned (4) was such that degreasing was carried out by means of chloroform washing. Moreover, aforementioned (1)-(9) were such that, before superimposing them on each other, smudges or foreign materials on their surfaces were removed with a wiping paper being soaked with a small amount of ethanol. Further, aforementioned (3)-(7) were such that, before superimposing them on each other, foreign materials on the top and bottom were checked visually; and the visual inspection was carried out again after wiping off the foreign materials using a wiping cloth ("Microster CP" produced by TEIZIN Co., Ltd.) being soaked with a small amount of ethanol, and were then superimposed on each other after checking that the foreign materials could be removed.

When the cross section of Sample No. 1 was observed by a microscope to measure the thickness of the respective layers, the substrate was 0.4 mm, the intermediate layer was 96 µm, and the superficial layer was 107 µm.

[Sample No. 2]

Apart from adapting the substrate to "A2"; altering the film for intermediate layer to "S2"; and altering the film for superficial layer to "T2," the same press forming as that of Sample No. 1 was carried out, and thereby Sample No. 2 was obtained. The thickness of the respective layers of Sample No. 2 was such that the substrate: 0.4 mm, the intermediate layer: 33 µm, and the superficial layer: 38 µm.

[Sample No. 3]

Apart from adapting the substrate to "A3"; altering the film for intermediate layer to "S3"; and altering the film for superficial layer to "T3," the same press forming as that of Sample No. 1 was carried out, and thereby Sample No. 3 was obtained. The thickness of the respective layers of Sample No. 3 was such that the substrate: 0.5 mm, the intermediate layer: 76 µm, and the superficial layer: 27 µm.

[Sample No. 4]

Apart from altering the film for intermediate layer to "S4"; and altering the film for superficial layer to "T4," the same press forming as that of Sample No. 1 was carried out, and thereby Sample No. 4 was obtained. The thickness of the respective layers was such that the substrate: 0.4 mm, the intermediate layer: 46 µm, and the superficial layer: 66 µm.

[Sample No. 5]

Apart from adapting the substrate to "A4"; altering the film for intermediate layer to "S5"; and altering the film for superficial layer to "T5," the same press forming as that of Sample No. 1 was carried out, and thereby Sample No. 5 was obtained. The thickness of the respective layers was such that the substrate: 0.3 mm, the intermediate layer: 45 µm, and the superficial layer: 47 µm.

[Sample No. 6]

Apart from altering the film for intermediate layer to "S6"; and altering the film for superficial layer to "T6," the same press forming as that of Sample No. 1 was carried out, and thereby Sample No. 6 was obtained. The thickness of the respective layers was such that the substrate: 0.4 mm, the intermediate layer: 24 µm, and the superficial layer: 55 µm.

[Sample No. 7]

Apart from altering the film for intermediate layer to "S7"; and altering the film for superficial layer to "T7," the same press forming as that of Sample No. 1 was carried out, and thereby Sample No. 7 was obtained. The thickness of the respective layers was such that the substrate: 0.4 mm, the intermediate layer: 20 µm, and the superficial layer: 96 µm.

[Sample No. 8]

Apart from adapting the substrate to "A2"; altering the film for intermediate layer to "S8"; and altering the film for superficial layer to "T8," the same press forming as that of Sample No. 1 was carried out, and thereby Sample No. 8 was obtained. The thickness of the respective layers was such that the substrate: 0.4 mm, the intermediate layer: 45 µm, and the superficial layer: 31 µm.

[Sample No. 1']

Apart from the fact that no film for superficial layer was employed, the same press forming as that of Sample No. 1 was carried out, and thereby Sample No. 1' was obtained. The thickness of the respective layers was such that the substrate: 0.4 mm, and the intermediate layer: 96 µm.

[Sample No. 3']

Apart from not employing the films for intermediate layer; and altering the film for superficial layer to "TR1," the same press forming as that of Sample No. 1 was carried out, and thereby Sample No. 3' was obtained. The thickness of the respective layers was such that the substrate: 0.4 mm, and the superficial layer: 106 µ m. Since the substrate was bonded with "TR1" faultily, the other evaluations were not carried out.

[Sample No. 9]

Except that film "S1" for intermediate layer and film "T1" for superficial layer were altered to laminated film "ST1"; the intermediate layer of the laminated film was superimposed so as to contact with substrate "A1"; the set maximum temperature during press lamination was altered to 250 °C; and the set maximum-temperature holding time was altered to 30 minutes, press forming was done by mean of the same operations as those of Sample No. 1, and thereby Sample No. 9 was obtained. The thickness of the respective layers was such that the substrate: 0.4 mm, the intermediate layer: 6 µm, and the superficial layer: 39 µm.

[Sample No. 10]

The laminated film was adapted to "ST2, " the same operations as those of Sample No. 9 were carried out, and thereby Sample No. 10 was obtained. The thickness of the respective layers was such that the substrate: 0.4 mm, the intermediate layer: 11 µm, and the superficial layer: 86 µm.

[Sample No. 11]

The laminated film was adapted to "ST3, " the same operations as those of Sample No. 9 were carried out, and thereby Sample No. 11 was obtained. The thickness of the respective layers was such that the substrate: 0.4 mm, the intermediate layer: 35 µm, and the superficial layer: 26 µm.

[Sample No. 12]

Those, which were superimposed on each other in the following order; were set within the aforementioned high-performance high-temperature vacuum press forming machine; and were then press formed at a set maximum temperature of 360 °C, for a set maximum-temperature holding time of 30 minutes and under a set pressure of 5.2 MPa (the pressure between (3') and (4'), set forth below, was about 3.9 MPa); and thereby Sample No. 12 was obtained.

(1') A 1.5-mm-thickness stainless steel plate which was formed as a square whose sides were about 30 cm; (2') the aforementioned 1.6-mm-thickness cushioning paper, both of whose opposite surfaces were covered with a 35-µm copper foil, and which was formed as a square whose sides were about 20 cm; (3') substrate "A5, " which was processed as a square whose sides were 16 cm; (4') film "S9" (intermediate layer), which was processed as a square whose sides were 18 cm; (5') film "T9" (superficial layer), which was processed as a square whose sides were 18 cm; (6') the aforementioned 50-µm-thickness polyimide film, which was formed as a square whose sides were 20 cm; (7') a 125-µm-thickness polyimide film ("Capton 500 H" produced by TORAY-DuPont Co., Ltd.); (8') the same polyimide film as aforementioned (6'); (9') a 5-mm-thickness stainless plate, which was formed as a square whose sides were 20 cm; and (10') the same cushioning paper as aforementioned (1'), cushioning paper which was formed as a square whose sides were 18 mm.

Aforementioned (3') was such that degreasing was carried out by means of chloroform washing. Moreover, aforementioned (1')-(10') were such that, before superimposing them on each other, smudges or foreign materials on their surfaces were removed with a wiping paper being soaked with a small amount of ethanol. Further, aforementioned (3') was such that dust or foreign materials on the surfaces were removed using a blower made of rubber; and aforementioned (1')-(8') were such that, before superimposing them on each other, foreign materials on the top and bottom were checked visually; and the visual inspection was carried out again after wiping off the foreign materials using the aforementioned wiping cloth being soaked with a small amount of ethanol, and were then superimposed on each other after checking that the foreign materials could be removed.

When the cross section of Sample No. 12 was observed by a microscope to measure the thickness of the respective layers, the substrate was 4 mm, the intermediate layer was 46 µm, and the superficial layer was 45 µm.

[Sample No. 13]

Apart from adapting the substrate to "A6"; altering the film for intermediate layer to "S10"; and altering the film for superficial layer to "T10, " the same press forming as that of Sample No. 12 was carried out, and thereby Sample No. 13 was obtained. The thickness of the respective layers of Sample No. 13 was such that the substrate: 6 mm, the intermediate layer: 20 µm, and the superficial layer: 56 µm.

[Sample No. 14]

Apart from adapting the substrate to "A6"; altering the film for intermediate layer to "S11"; and altering the film for superficial layer to "T11," the same press forming as that of Sample No. 12 was carried out, and thereby Sample No.14 was obtained. The thickness of the respective layers was such that the substrate: 6 mm, the intermediate layer: 26 µm, and the superficial layer: 35 µm.

[Sample No. 15]

Apart from adapting the substrate to "A7; altering the film for intermediate layer to "S12"; and altering the film for superficial layer to "T12, " the same press forming as that of Sample No. 12 was carried out, and thereby Sample No.15 was obtained. The thickness of the respective layers was such that the substrate: 8 mm, the intermediate layer: 24 µm, and the superficial layer: 55 µm.

[Sample No. 16]

Apart from adapting the substrate to "A6"; altering the film for intermediate layer to "S13"; and altering the film for superficial layer to "T13," the same press forming as that of Sample No. 12 was carried out, and thereby Sample No. 16 was obtained. The thickness of the respective layers was such that the substrate: 6 mm, the intermediate layer: 35 µm, and the superficial layer: 64 µm.

[Sample No. 17]

Except that the substrate was adapted to "A6"; film "S9" for intermediate layer and film "T9" for superficial layer were altered to laminated film "ST4"; the intermediate layer of the laminated film was superimposed so as to contact with substrate "A6"; the set maximum temperature during press lamination was altered to 250 °C; and the set maximum-temperature holding time was altered to 30 minutes, press forming was done by mean of the same operations as those of Sample No. 12, and thereby Sample No. 17 was obtained. The thickness of the respective layers was such that the substrate: 6 mm, the intermediate layer: 5 µm, and the superficial layer: 21 µm.

[Sample No. 18]

Except that the substrate was altered to "A5; and the laminated film was altered to "ST5," the same operations as those of Sample No. 17 were carried out, and thereby Sample No. 18 was obtained. The thickness of the respective layers was such that the substrate: 4 mm, the intermediate layer: 10 µm, and the superficial layer: 85 µm.

[Sample No. 19]

Except that the laminated film was altered to "ST6," the same operations as those of Sample No. 17 were carried out, and thereby Sample No. 19 was obtained. The thickness of the respective layers was such that the substrate: 6 mm, the intermediate layer: 34 µm, and the superficial layer: 26 µm.

[Sample No. 20]

Except that the substrate was altered to "A8"; and the laminated film was altered to "ST5"; moreover, the set maximum temperature during press forming was altered to 240 °C, the same operations as those of Sample No. 17 were carried out, and thereby Sample No. 20 was obtained. The thickness of the respective layers was such that the substrate: 8 mm, the intermediate layer: 11 µ m, and the superficial layer: 85 µm.

[Sample No. 21]

Except that the substrate was altered to "A9"; and the laminated film was altered to "ST6," the same operations as those of Sample No. 20 were carried out, and thereby Sample No. 21 was obtained. The thickness of the respective layers was such that the substrate: 6 mm, the intermediate layer: 35 µm, and the superficial layer: 25 µm.

[Evaluation]

A variety of measured values and evaluations on the aforementioned samples; and moreover on the substrates and films, which were employed in the respective samples; were carried out in the following manner. Here, the flowing direction out of the extruders for the films are called as the "vertical direction," and the orthogonal direction with respect thereto is called as the "horizontal direction."

[End Come-off upon Shearing]

Regarding Sample Nos. 1-11 and Sample No. 1' as well as Sample No. 3' in which the thickness of the substrate was 1 mm or less, using a shearing machine produced by IKUNO KIKAI Co., Ltd. (about-1,000-mm blade, and footing type), the laminated bodies were cut into a strip shape, whose width was 3 cm and length was 20 cm, in a quantity of 3 pieces, were observed visually whether they had come-off, which occurred at the long-side ends, or not, and were divided into the following 4 ranks to evaluate them. Note that, when the come-off occurrence states differed between the cut end on the fixed-blade side and the cut portion on the movable-blade side, the come-off state of the end whose come-off length or width was larger; and further the cut-end come-off state of the remaining part after cutting them into the aforementioned strip-shaped test pieces was observed as well; and, when the length or width of cut-off was larger, they themselves were adapted to evaluation results.
Rank 1: No come-off at the ends occurred, or the maximum value of come-off width was 0.5 mm or less.
Rank 2: The maximum value of come-off width was over 0.5 mm and 1 mm or less.
Rank 3: Come-off occurred at the ends entirely, and the come-off width was over 1 mm partially at least.
Rank 4: Such a state that come-off spread gradually from the ends beyond a come-off width of 1 mm so that at least 10% of their laminated surfaces came off, in a 2-day state adjustment at room temperature after cutting them by means of shearing.

Moreover, regarding Sample No. 12-Sample No. 21 in which the thickness of substrates surpassed 1 mm, since they could not be cut by shearing, the sliding surfaces were provided with parallelly linear cuts in a quantity of 3 lines at intervals of 2 cm by means of cutter knife; further they were provided with linear cuts in a quantity of 3 lines at intervals of 2 cm in the vicinity of the centers of their straight lines in the perpendicular direction with respect to their straight lines; and the come-off states were observed visually. Moreover, the leading end of cutter knife was inserted into the cut parts, and thereby making come-off at the cut parts was tried. They were observed visually whether they had come-off, which occurred at the cut parts, or not, and were divided into the following 4 ranks to evaluate them.
Rank 1: No come-off at the cuts occurred, or the maximum value of come-off width was 0.5 mm or less.
Rank 2: The maximum value of come-off width at the cuts was over 0.5 mm and 1 mm or less.
Rank 3: Come-off occurred at the cuts entirely, and the come-off width was over 1 mm partially at least.
Rank 4: Such a state that come-off spread gradually from the cut parts beyond a come-off width of 1 mm so that at least 10% of their laminated surfaces came off, in a 2-day state adjustment at room temperature after cutting them by means of cutter knife.

[Come-off Strength]

Regarding Sample Nos. 1-11 and Sample No. 1' as well as Sample No. 3' in which the thickness of substrates was 1 mm or less, they were cut into a strip shape, whose width was 3 cm and length was 20 cm, by means of the aforementioned shearing machine; a cut-off was made at a position on an inner side by 5 mm from the 20-cm-length opposite-side ends with a cutter knife; further a cut-off was made at a position on an inner side by about 3-5 cm from one of the 3-cm-length opposite sides substantially parallelly to the 3-cm-length side with a cutter knife; come-off spots for come-off strength measurement were made by bending them repeatedly at the positions in the thickness-wise direction of substrates; and were adapted to test pieces.

Moreover, regarding Sample No. 12-Sample No. 21 in which the thickness of the substrates surpassed 1 mm, the sliding surfaces were provided with parallelly linear cuts in a quantity of 5 lines at intervals of 2 cm by means of a cutter knife; further they were provided with a linear cut in a quantity of 1 line at a position of 2-3 cm from the ends of their straight lines in the perpendicular direction with respect to their straight lines; and the making of come-off spots were tried by inserting the leading end of cutter knife into the cut parts. Those in which the sliding layers bent down or broken down during the making of cut-off spots were judged that the come-off strengths were stronger than the material strengths, and were judged "material broken-down" (designated as "m/b" in the tables).

Further, for the purpose of adhesion-strength measurement, in order to pull the sliding layers at the come-off parts, a 18-mm-width cellophane tape was installed onto the come-off parts, and a pulling allowance was disposed. Specifically, a 18-mm-width cellophane tape (NICHIBAN cellophane tape "CT405A-18") was cut off to a length of about 33 mm; was folded in two at the middle with the adhesive surface disposed inside while leaving about 1.5 cm at the opposite ends; the opposite ends were installed onto the aforementioned come-off parts and were thereby adapted to 18-mm-width and about-15-cm-length allowances.

They were pulled from the come-off spots in the perpendicular direction with respect to the surface of samples, using the sliding layer or aforementioned cellophane tape, and the come-off spots were widened. Those in which the come-off spots were widened were pulled in the 180-degree direction at a rate of 50 mm/minute by a tensile testing machine, and the come-off strengths were measured. Those in which the films were torn off during the widening operation were judged that the come-off strengths were stronger than the material strengths, and were judged "material broken-down" (designated as "m/b" in the tables).

[Friction-coefficient Measurement]

According to JIS K7125-1987, the static friction coefficient and dynamic friction coefficient were measured.

[Pencil-hardness Measurement]

According to JIS K3312-1994, the pencil hardness was measured.

[Surface Roughness of Substrates Employed for Laminated Bodies]

Using a surface-roughness measuring apparatus "SE3-FK" produced by KOSAKA KENKYUSHO Co., Ltd., the surface-roughness parameters, which are prescribed in JIS B0601-1994, were measured. The measured surface-roughness parameters were the ten-point average roughness (Rz), the maximum height (Ry), and the arithmetic average roughness (Ra).

[Solvent Resistance]

The respective samples were immersed into chloroform at room temperature for 8 hours; the changes of superficial appearance were observed visually; and they were compared with a not-immersed sample and were divided into the following 5 ranks to evaluate them.
Rank 1: No appearance change was present.
Rank 2: The surface's gloss changed.
Rank 3: Superficial roughening occurred partially.
Rank 4: Superficial roughening occurred entirely.
Rank 5: Being solved partially at least.

The evaluated results are specified in Table 1-Table 4.

**[TABLE 1]**

| Sample | | | 1 | 2 | 3 | 4 | 5 | 6 | 7 | 8 | 1' | 3' |
|---|---|---|---|---|---|---|---|---|---|---|---|---|
| Substrate | Abbreviated Code | | "A1" | "A2" | "A3" | "A1" | "A4" | "A1" | "A1" | "A2" | "A1" | "A1" |
| | Type | | SUS304 | SUS301 | SUS304 | SUS304 | SUS316 | SUS304 | SUS304 | SUS301 | SUS304 | SUS304 |
| | Thickness [mm] | | 0.4 | 0.4 | 0.5 | 0.4 | 0.3 | 0.4 | 0.4 | 0.4 | 0.4 | 0.4 |
| | Surface Roughness | Ra [µm] | 0.18 | 0.08 | 0.17 | 0.18 | 0.07 | 0.18 | 0.18 | 0.08 | 0.18 | 0.18 |
| | | Ry [µm] | 1.5 | 1.0 | 1.67 | 1.5 | 1.87 | 1.5 | 1.5 | 1 | 1.5 | 1.5 |
| | | Rz [µm] | 1.4 | 0.92 | 1.37 | 1.4 | 1.15 | 1.4 | 1.4 | 0.92 | 1.4 | 1.4 |

(continued)

**[TABLE 1 (continued)]**

| Sample | | | | 1 | 2 | 3 | 4 | 5 | 6 | 7 | 8 | 1' | 3' |
|---|---|---|---|---|---|---|---|---|---|---|---|---|---|
| Slid-Intering medi-Layerate Layer | | Abbreviated Code | | "S1" | "S2" | "S3" | "S4" | "S5" | "S6" | "S7" | "S8" | "S1" | - |
| | | Thickness [µm] | | 100 | 35 | 80 | 50 | 50 | 28 | 24 | 50 | 100 | - |
| | | Resinous Compositon | PEI-1 [% by mass] | 28 | 55 | 40 | 40 | 30 | 55 | 40 | 30 | 28 | - |
| | | | PEI-2 [% by mass] | 32 | - | 25 | 35 | 30 | - | 30 | 30 | 32 | - |
| | | | PEEK-1 [% by mass] | 40 | 45 | 35 | 25 | 40 | 45 | 30 | 40 | 40 | - |
| | | Filler Material | "C1" [parts by mass] | 38.9 | - | - | - | - | - | - | - | 38.9 | - |
| | | | "C2" [parts by mass] | - | 25 | 31.6 | - | - | - | - | 15 | - | - |
| | | | "C3" [parts by mass] | - | - | - | 22 | 33.3 | 25 | 25 | - | - | - |
| | | Lubricant | "D1" [parts by mass] | - | - | - | - | - | - | - | 15 | - | - |
| | | | "D2" [parts by mass] | - | - | - | - | - | - | - | 10 | - | - |

(continued)

**[TABLE 1 (continued)]**

| Sample | | | | 1 | 2 | 3 | 4 | 5 | 6 | 7 | 8 | 1' | 3' |
|---|---|---|---|---|---|---|---|---|---|---|---|---|---|
| Slid-Supering ficial Layer | | Abbreviated Code | | "T1" | "T2" | "T3" | "T4" | "T5" | "T6" | "T7" | "T8" | - | "TR1" |
| | | Thickness [µm] | | 110 | 40 | 30 | 70 | 50 | 60 | 100 | 35 | - | 110 |
| | | PEEK-1 [% by mass] | | 100 | 100 | 100 | 100 | 100 | 100 | 100 | 100 | - | 100 |
| | | Filler Material | "C1" [parts by mass] | 38.9 | - | - | - | - | - | - | - | - | - |
| | | | "C2" [parts by mass] | - | 31.6 | - | - | - | - | - | - | - | - |
| | | | "C3" [parts by mass] | - | - | - | 22 | 33.3 | - | - | 10 | - | - |
| | | Lubricant | "D1" [parts by mass] | - | - | - | - | - | 25 | - | 20 | - | - |
| | | | "D2" [parts by mass] | - | - | - | - | - | - | 20 | 10 | - | - |
| | | | "D3" [parts by mass] | - | - | - | - | - | - | - | - | - | - |
| Laminating Temp. [°C]-Holding Temp. [min.] | | | | 360-20 | 360-20 | 360-20 | 360-20 | 360-20 | 360-20 | 360-20 | 360-20 | 360-20 | 360-20 |

(continued)

**[TABLE 1 (continued)]**

| Sample | | | 1 | 2 | 3 | 4 | 5 | 6 | 7 | 8 | 1' | 3' |
|---|---|---|---|---|---|---|---|---|---|---|---|---|
| Characteristic of Slide Member | Thickness | Intermediate Layer [µm] | 96 | 33 | 76 | 46 | 45 | 24 | 20 | 45 | 96 | - |
| | | Superficial Layer [µm] | 107 | 38 | 27 | 66 | 47 | 55 | 96 | 31 | - | 106 |
| | | Superficial Layer/Intermediate Layer | 47/53 | 46/54 | 74/26 | 41/59 | 49/51 | 30/70 | 17/83 | 59/41 | 100/0 | 0/100 |
| | Come-off State at Cut Ends | | 1 | 1 | 2 | 1 | 1 | 1 | 1 | 1 | 1 | 4 |
| | Come-off Strength between Substrate and Intermediate Layer | | "m/b" | "m/b" | "m/b" | "m/b" | "m/b" | "m/b" | "m/b" | "m/b" | "m/b" | Faulty |
| | Static Friction Coefficient | | 0.235 | 0.233 | 0.242 | 0.237 | 0.235 | 0.194 | 0.224 | 0.197 | 0.338 | - |
| | Dynamic Friction Coefficient | | 0.163 | 0.165 | 0.173 | 0.162 | 0.168 | 0.158 | 0.173 | 0.156 | 0.205 | - |
| | Pencil Hardness | | H | H | F | H | H | H | H | H | F | - |
| | Solvent Resistance | | 1 | 1 | 1 | 1 | 1 | 1 | 1 | 1 | 2 | - |

**[TABLE 2]**

| Sample | | | | 9 | 10 | 11 |
|---|---|---|---|---|---|---|
| Substrate | Abbreviated Code | | | "A1" | "A1" | "A1" |
| | Type | | | SUS304 | SUS304 | SUS304 |
| | Thickness [mm] | | | 0.4 | 0.4 | 0.4 |
| | Surface Roughness | Ra [µm] | | 0.18 | 0.18 | 0.18 |
| | | Ry [µm] | | 1.5 | 1.5 | 1.5 |
| | | Rz [µm] | | 1.4 | 1.4 | 1.4 |
| Sliding Layer | Abbreviated Code | | | "ST1" | "ST2" | "ST3" |
| | Thickness [µm] | | | 50 | 105 | 70 |
| | Intermediate Layer | Thickness [µm] | | 8 | 15 | 40 |
| | | Resinous Compositon | PEI-1 [% by mass] | 28 | 60 | 60 |
| | | | PEI-2 [% by mass] | 30 | - | 15 |
| | | | PEEK-1 [% by mass] | 42 | 40 | 25 |
| | | Filler Material | "C1" [parts by mass] | - | - | - |
| | | | "C2" [parts by mass] | 25 | - | - |
| | | | "C3" [parts by mass] | - | 15 | 15 |
| | | Lubricant | "D1" [parts by mass] | - | 15 | - |
| | | | "D2" [parts by mass] | - | - | 10 |

(continued)

**[TABLE 2 (continued)]**

| Sample | | | | 9 | 10 | 11 |
|---|---|---|---|---|---|---|
| Sliding Layer | Superficial Layer | Thickness [µm] | | 42 | 90 | 30 |
| | | PEEK-1 [% by mass] | | 100 | 100 | 100 |
| | | Filler Material | "C1" [pars by mass] | - | - | - |
| | | | "C2" [parts by mass] | - | - | - |
| | | | "C3" [parts by mass] | - | 8 | 10 |
| | | Lubricant | "D1" [parts by mass] | - | 25 | 20 |
| | | | "D2" [parts by mass] | - | - | 10 |
| | | | "D3" [parts by mass] | - | - | - |
| Laminating Temp. [°C]-Holding Temp. [min.] | | | | 250-30 | 250-30 | 250-30 |
| Characteristic of Slide Member | Thickness | Intermediate Layer [µm] | | 6 | 11 | 35 |
| | | Superficial Layer [µm] | | 39 | 86 | 26 |
| | | Superficial Layer/Intermediate Layer | | 13/87 | 11/89 | 57/43 |
| | Come-off State at Cut Ends | | | 2 | 1 | 1 |
| | Come-off Strength between Substrate and Intermediate Layer | | | "m/b" | "m/b" | "m/b" |
| | Static Friction Coefficient | | | 0.243 | 0.185 | 0.183 |
| | Dynamic Friction Coefficient | | | 0.174 | 0.163 | 0.161 |
| | Pencil Hardness | | | F | H | H |
| | Solvent Resistance | | | 1 | 1 | 1 |

**[TABLE 3]**

| Sample | | | | 12 | 13 | 14 | 15 | 16 |
|---|---|---|---|---|---|---|---|---|
| Substrate | Abbreviated Code | | | "A5" | "A6" | "A6" | "A7" | "A6" |
| | Type | | | Cast Iron | Cast Iron | Cast Iron | Cast Iron | Cast Iron |
| | Thickness [mm] | | | 4 | 6 | 6 | 10 | 6 |
| | Surface Roughness | Ra [µm] | | 1.07 | 0.56 | 0.56 | 0.83 | 0.56 |
| | | Ry [µm] | | 11.1 | 5.8 | 5.8 | 8.5 | 5.8 |
| | | Rz [µm] | | 8.5 | 4.9 | 4.9 | 6.6 | 4.9 |
| Sliding Layer | Intermediate Layer | Abbreviated Code | | "S9" | "S10" | "S11" | "S12" | "S13" |
| | | Thickness [µm] | | 50 | 25 | 30 | 28 | 40 |
| | | Resinous Compositon | PEI-1 [% by mass] | 30 | 55 | 30 | 40 | 30 |
| | | | PEI-2 [% by mass] | 30 | - | 30 | 30 | 30 |
| | | | PEEK-1 [% by mass] | 40 | 45 | 40 | 30 | 40 |
| | | Filler Material | "C1" [parts by mass] | - | - | - | - | - |
| | | | "C2" [parts by mass] | - | - | - | - | - |
| | | | "C3" [parts by mass] | - | - | 10 | 15 | 25 |
| | | Lubricant | "D1" [parts by mass] | - | 5 | 5 | 15 | - |
| | | | "D2" [parts by mass] | - | 5 | 10 | - | - |

(continued)

**[TABLE 3 (continued)]**

| Sample | | | | 12 | 13 | 14 | 15 | 16 |
|---|---|---|---|---|---|---|---|---|
| Slid- Supering ficial Layer | | Abbreviated Code | | "T9" | "T10" | "T11" | "T12" | "T13" |
| | | Thickness [µm] | | 50 | 60 | 40 | 60 | 70 |
| | | PEEK-1 [% by mass] | | 100 | 100 | 100 | 100 | 100 |
| | | Filler Material | "C1" [parts by mass] | - | - | - | - | - |
| | | | "C2" [parts by mass] | - | - | - | - | - |
| | | | "C3" [parts by mass] | - | - | 10 | 15 | 5 |
| | | Lubricant | "D1" [parts by mass] | - | 25 | 20 | 20 | - |
| | | | "D2" [parts by mass] | - | - | 10 | - | 5 |
| | | | "D3" [parts by mass] | - | - | - | - | 20 |
| Laminating Temp. [°C]-Holding Temp. [min.] | | | | 360-30 | 360-30 | 360-30 | 360-30 | 360-30 |
| Characteristic of Slide Member | Thickness | Intermediate Layer [µm] | | 46 | 20 | 26 | 24 | 35 |
| | | Superficial Layer [µm] | | 45 | 56 | 35 | 55 | 64 |
| | | Superficial Layer/Intermediate Layer | | 51/49 | 26/74 | 43/57 | 30/70 | 35/65 |
| | Come-off State at Cut Ends | | | 1 | 1 | 1 | 1 | 1 |
| | Come-off Strength between Substrate and Intermediate Layer | | | "m/b" | "m/b" | "m/b" | "m/b" | "m/b" |
| | Static Friction Coefficient | | | 0.243 | 0.194 | 0.197 | 0.198 | 0.185 |
| | Dynamic Friction Coefficient | | | 0.173 | 0.158 | 0.156 | 0.160 | 0.162 |
| | Pencil Hardness | | | F | H | H | H | H |
| | Solvent Resistance | | | 1 | 1 | 1 | 1 | 1 |

**[TABLE 4]**

| Sample | | | | 17 | 18 | 19 | 20 | 21 |
|---|---|---|---|---|---|---|---|---|
| Substrate | Abbreviated Code | | | "A6" | "A5" | "A6" | "A8" | "A9" |
| | Type | | | Cast Iron | Cast Iron | Cast Iron | Al | Al Alloy |
| | Thickness [mm] | | | 6 | 4 | 6 | 8 | 6 |
| | Surface Roughness | Ra [µm] | | 0.56 | 1.07 | 0.56 | 0.74 | 0.85 |
| | | Ry [µm] | | 5.8 | 11.1 | 5.8 | 7.5 | 9.1 |
| | | Rz [µm] | | 4.9 | 8.5 | 4.9 | 6.1 | 7.2 |
| Sliding Layer | Abbreviated Code | | | "ST4" | "ST5" | "ST6" | "ST5" | "ST6" |
| | Thickness [µm] | | | 34 | 105 | 7.0 | 105 | 70 |
| | Intermediate Layer | Thickness [µm] | | 8 | 15 | 40 | 15 | 40 |
| | | Resinous Compositon | PEI-1 [% by mass] | 35 | 58 | 60 | 58 | 60 |
| | | | PEI-2 [% by mass] | 30 | - | 15 | - | 15 |
| | | | PEEK-1 [% by mass] | 35 | 42 | 25 | 42 | 25 |
| | | Filler Material | "C1" [parts by mass] | - | - | - | - | - |
| | | | "C2" [parts by mass] | - | - | - | - | - |
| | | | "C3" [parts by mass] | - | 15 | 15 | 15 | 15 |
| | | Lubricant | "D1" [parts by mass] | - | 10 | - | 10 | - |
| | | | "D2" [parts by mass] | - | - | 10 | - | 10 |

(continued)

**[TABLE 4 (continued)]**

| Sample | | | | 17 | 18 | 19 | 20 | 21 |
|---|---|---|---|---|---|---|---|---|
| Sliding Layer | Superficial Layer | Thickness [µm] | | 26 | 90 | 30 | 90 | 30 |
| | | PEEK-1 [% by mass] | | 100 | 100 | 100 | 100 | 100 |
| | | Filler Material | "C1" [parts by mass] | - | - | - | - | - |
| | | | "C2" [parts by mass] | - | - | - | - | - |
| | | | "C3" [parts by mass] | 10 | - | 5 | - | 5 |
| | | Lubricant | "D1" [parts by mass] | 20 | 25 | 20 | 25 | 20 |
| | | | "D2" [parts by mass] | 5 | - | 5 | - | 5 |
| | | | "D3" [parts by mass] | - | - | - | - | - |
| Laminating Temp. [°C]-Holding Temp. [min.] | | | | 250-30 | 250-30 | 250-30 | 240-30 | 24030 |
| Characteristic of Slide Member | Thickness | Intermediate Layer [µm] | | 5 | 10 | 34 | 11 | 35 |
| | | Superficial Layer [µm] | | 21 | 85 | 26 | 85 | 25 |
| | | Superficial Layer/Intermediate Layer | | 19/81 | 11/89 | 57/43 | 11/89 | 54/46 |
| | Come-off State at Cut Ends | | | 1 | 1 | 1 | 1 | 1 |
| | Come-off Strength between Substrate and Intermediate Layer | | | "m/b" | "m/b" | "m/b" | "m/b" | "m/b" |
| | Static Friction Coefficient | | | 0.244 | 0.186 | 0.183 | 0.184 | 0.183 |
| | Dynamic Friction Coefficient | | | 0.174 | 0.163 | 0.164 | 0.164 | 0.165 |
| | Pencil Hardness | | | F | H | H | H | H |
| | Solvent Resistance | | | 1 | 1 | 1 | 1 | 1 |

Sample Nos. 1-21, which possessed the sliding layer comprising the intermediate layer and the superficial layer, were such that the adhesiveness between the metallic substrates and the sliding layers (intermediate layers) were better than that of Sample No. 3', which possessed the superficial layer alone, (the come-off strengths were stronger). Further, even when the set temperature during press forming was adapted to 250 °C or less, the slide members, which were good in terms of the adhesiveness between the substrates and the intermediate layers, were obtained (Sample Nos. 9-11 and 17-21). In Sample Nos. 9-11 and 17-21, it was possible to prevent the strength deterioration of the substrates, which resulted from the heat of press forming, by means of press forming at low temperature.

Moreover, Sample Nos. 1-21 were better in terms of the sliding characteristics than those of Sample No. 1', which possessed the intermediate layer alone. Further, the slide members, which included the solid lubricants ("D1," "D2," and "D3") in the intermediate layers and/or the superficial layers, were such that the static friction coefficients and dynamic friction coefficients were low, and exhibited good sliding characteristics.

## Claims

1. A slide member for a compressor, the slide member being **characterized in that** it has:
a substrate, which is made of a metal;
an intermediate layer, which is formed on at least one of the surfaces of the substrate, and which is composed a first resinous composition including a thermoplastic polyimide resin and a polyaryl ketone resin; and
a superficial layer, which is formed on the intermediate layer, and which is composed of a second resinous composition including a polyaryl ketone resin.

2. The slide member for a compressor set forth in claim 1, wherein said superficial layer includes said solid lubricant in an amount of 400 parts by mass or less when said second resinous composition is taken as 100 parts by mass.

3. The slide member for a compressor set forth in claim 2, wherein said solid lubricant includes at least one member of polytetrafluoroethylene, graphite and molybdenum disulfide.

4. The slide member for a compressor set forth in claim 1, wherein said intermediate layer includes an inorganic filler material in an amount of 100 parts by mass or less when said first resinous composition is taken as 100 parts by mass.

5. The slide member for a compressor set forth in claim 1, wherein said superficial layer includes an inorganic filler material in an amount of 100 parts by mass or less when said second resinous composition is taken as 100 parts by mass.

6. The slide member for a compressor set forth in claim 4 or claim 5, wherein said inorganic filler material is mica.

7. The slide member for a compressor set forth in claim 1, wherein:
said polyimide resin is a polyetherimide resin, which has a repeating unit being expressed by structural formula (1) and/or structural formula (2); and
said polyaryl ketone resin is a polyether ether ketone resin, which is expressed by structural formula (3).

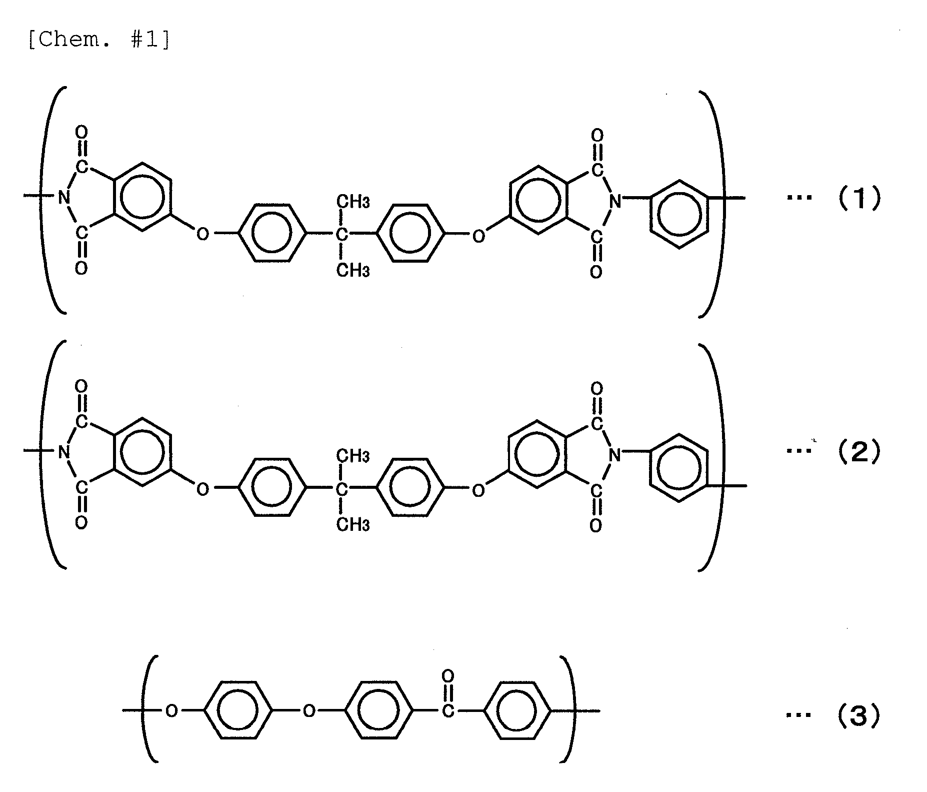

8. The slide member for a compressor set forth in claim 1, wherein said resinous composition is such that a mass ratio of said thermoplastic polyimide resin to said polyaryl ketone resin is 95:5-5:95.

9. The slide member for a compressor set forth in claim 1, wherein said resinous composition is such that a mass ratio of said thermoplastic polyimide resin to said polyaryl ketone resin is 95:5-45:55.

10. The slide member for a compressor set forth in claim 1, wherein:
a thickness of said intermediate layer is 0.1-800 µm; and
a thickness of said superficial layer is 1-1,000 µm.

11. The slide member for a compressor set forth in claim 1, wherein a thickness ratio of said intermediate layer to said superficial layer is in a range of 1/99-99/1.

12. The slide member for a compressor set forth in claim 1, wherein said slide member is a swash plate for a swash plate-type compressor.

13. The slide member for a compressor set forth in claim 1, wherein said slide member is a shoe for a compressor.

14. A compressor having said slide member set forth in either one claim of claim 1-claim 13.
